# EUROPEAN PATENT SPECIFICATION

(11) **EP 4 601 880 B1**
(45) Date of publication and mention of the grant of the patent: **18.02.2026**
(21) Application number: 23813383.9
(22) Date of filing: 27.11.2023
(51) Int. Cl.: B32B 27/32, B32B 27/36, B32B 27/40, B65D 85/00, C08G 18/10, C08G 18/28, C08G 18/42, C08G 18/72, C08G 18/76, C08G 18/79, C09J 175/06, C09J 175/08

(54) **RETORTABLE SOLVENT FREE LAMINATION ADHESIVES**
STERILISIERBARE LÖSUNGSMITTELFREIE KASCHIERKLEBSTOFFE
ADHÉSIFS DE STRATIFICATION SANS SOLVANT STÉRILISABLES

(30) Priority: 25.11.2022 EP 22209746
(43) Date of publication of application: 20.08.2025
(73) Proprietor: Sun Chemical B.V., 1382 LV Weesp (NL)
(72) Inventor: MARI, Matteo Neri, 27043 Pavia (IT); FRINAULT, Thierry, Newhey Rochdale OL16 4LE (GB)
(74) Representative: Carpmaels & Ransford LLP
(86) International application number: PCT/EP2023/083202
(87) International publication number: WO 2024/110670

(56) References cited:
- EP-A1- 3 176 196
- JP-B2- 3 900 441

## Description

### FIELD OF THE INVENTION

The present invention relates to solvent-free, two-pack adhesives and the use of said adhesives in providing laminates for retort applications.

### BACKGROUND OF THE INVENTION

Retort is a well-known process in the packaging industry where hermetically sealed pouches containing moist foodstuffs are processed at elevated temperatures, typically in excess of 100°C, to both cook and sterilize the food.

Solvent-based adhesives are used in retort applications as they provide the bonding strength between the layers of the packaging laminate under the conditions of the retort process that is required to ensure the integrity of the laminate without delamination failures. In particular, solvent-based adhesives have high resistance to thermal degradation, partially because solvent-based adhesives allow for the use of higher molecular weight starting materials, which build stronger networks that are less susceptible to forming migratable, small-molecule species upon thermolysis. The solvent maintains a suitable viscosity of the composition for use in lamination, which would otherwise be increased as a result of the incorporation of high-molecular weight materials.

It is therefore desirable to provide an alternative solvent-free adhesive for retort applications to eliminate the need for removing and handling volatile solvents, such as ethyl acetate and methyl ethyl ketone (MEK). Furthermore, higher lamination press speeds are achievable with solvent-free adhesives.

Solvent-free adhesives are known in the art. However, without the presence of a solvent the molecular weight of the components must be limited in order to provide a composition with a viscosity suitable for use in lamination and while low molecular weight species can provide lower viscosity compositions, they can also migrate through the composition and contaminate foodstuffs with which they contact.

One method for providing lower viscosity adhesive compositions and also reducing the amounts of migratable species present in the adhesives is to remove the residual isocyanate monomer, e.g., using evaporation techniques. EP3176196 relates to a one-pack lamination adhesive comprising aromatic isocyanate polyurethane prepolymers, in which the amount of free diisocyanate monomer in the polyurethane prepolymer is reduced to less than 0.1% (w/w) using of a thin-film evaporator. The residual diisocyanate monomer is removed under pressures of 0.1 mbar or less at 140 °C. However, EP3176196 does not disclose two-pack adhesives, which have different requirements to one-pack adhesives, such as those according to the present invention comprising aliphatic polyurethane prepolymers. Moreover, EP3176196 does not disclose that these adhesive compositions are suitable for the preparation of flexible packaging laminates for the manufacture of retortable pouches.

US5202001 discloses the use of a thin-film evaporator to remove an aromatic diisocyanate (TDI - toluene diisocyanate) from an isocyanate-functionalised polyurethane prepolymer. The use of aromatic isocyanates in making polyurethane prepolymers is undesirable due to the risks associated with generation of potentially harmful primary aromatic amines, which can be produced under retort conditions. Moreover, US5202001 does not relate to adhesive compositions and does not disclose adhesives according to the present invention, comprising aliphatic polyurethane prepolymers. Furthermore, US5202001 does not disclose the use of adhesives in the preparation of retortable laminates.

A number of prior art documents relate to reducing the amount of residual diisocyanate monomers present in polyurethane prepolymers by distillation in the presence of what are referred to as "inert solvents". In this regard, US20030065124 discloses the removal of free diphenylmethane diisocyanate (MDI) via a reduced-pressure distillation using a wiped film evaporator. The process employs dimethyl phthalate as the "inert solvent", having a boiling point below that of MDI. Similarly, WO2018013688 relates to polyurethane prepolymers prepared from aromatic paraphenylene diisocyanate (PPDI), from which free monomer is also removed using a wiped film evaporator. In this case, dimethyl adipate is used as the "inert solvent".

Neither US20030065124 nor WO2018013688 relate to adhesive compositions and thus neither discloses a two-pack adhesive according to the present invention comprising aliphatic polyurethane prepolymers. Nor do these documents disclose the use of such an adhesive in the preparation of laminates suitable for retort applications. Moreover, in contrast to the aliphatic polyurethane isocyanate functional prepolymers of the present invention, the polyurethane prepolymers of US20030065124 and WO2018013688 are prepared using solvents, i.e., they are not solvent-free.

CN110922929 relates to a one-pack isocyanate functional polyurethane prepolymer-based adhesive, which can be used to manufacture flexible laminates. CN110922929 does not relate to two-pack adhesives and does not disclose reducing the amount of free isocyanate monomer to less than 0.1% (w/w) of the polyurethane prepolymer component. Moreover, there is no teaching of how to maintain the viscosity of the disclosed compositions at a level suitable for use in a laminating machine, while also removing residual isocyanate monomer. CN110922929 does not disclose use of a wiped film evaporator. Moreover, CN110922929 does not teach that using aliphatic polyurethane precursors would provide laminate adhesives with improved bonding strength under retort conditions. Furthermore, the one-pack CN110922929 compositions comprise significant amounts of catalyst in order to function, which results in a significantly reduced pot life that is unsuitable for use in a two-pack adhesive kit.

CN102604583B relates to solvent-free, two-pack adhesives that can be used in the manufacture of flexible laminates that can resist boiling. However, CN102604583B does not disclose reducing the amount of free isocyanate monomer to less than 0.1% (w/w) of the polyurethane prepolymer component, nor teach how the viscosity of the disclosed compositions could be maintained at a level suitable for use in a laminating machine, while also removing residual isocyanate monomer. Moreover, CN102604583B does not disclose the use of a wiped film evaporator. Furthermore, a reactive silane is an essential component of the CN102604583B adhesive. Finally, CN102604583B does not evaluate the disclosed adhesives under retort conditions.

JP 3900441 B2 discloses an isocyanate composition which is obtained by reacting at least one high- molecular polyol (A) obtained by reacting at least one alkylene diol, at least one diol having a pendant aliphatic chain, and at least one polycarboxylic acid with at least one NCO-terminated polyurethane prepolymer (B) obtained by reacting at least one high-molecular polyol with at least one polyisocyanate, has an initial viscosity lower than about 25,000mPa.s at 25±5 °C, and is useful as a solventless isocyanate-based lamination adhesive for soft packaging improved in low-temperature handleability.

JP 2010059362 A discloses a polyisocyanate component which contains a diisocyanate-terminated prepolymer obtained by reacting a diisocyanate including an araliphatic diisocyanate with a diol including a macrodiol. A polyol component contains a polyurethane polyol obtained by reacting a diol including a macrodiol and a crosslinkable polyol having three or more hydroxy groups with the diisocyanate.

To the best of the inventors' knowledge, the successful use of solvent-free, two-pack lamination adhesives comprising aliphatic polyurethane prepoloymers comprising an amount of free isocyanate monomer of less than 0.1% (w/w), and which are suitable for retort applications has not been disclosed. Therefore, the solvent-free, lamination adhesive kit of the present invention is advantageous at least in this respect. Further advantages associated with the solvent-free, lamination adhesive kit of the present invention are described herein.

### SUMMARY OF THE INVENTION

The present invention provides a solvent-free, lamination adhesive kit comprising:
a) a composition comprising:
   i) an isocyanate-functionalised, aliphatic polyurethane prepolymer comprising monomeric units derived from aliphatic isocyanate monomers, wherein an aliphatic polyurethane prepolymer is formed from aliphatic isocyanate monomers, wherein the identity of the isocyanate alone dictates the polyurethane as being aliphatic or aromatic, and wherein an aliphatic isocyanate monomer is one wherein the isocyanate group(s) is/are not directly attached to an aromatic ring; wherein the aliphatic isocyanate monomers are diisocyanates selected from the group consisting of hexamethylene diisocyanate, isophorone diisocyanate, methylene dicyclohexyl diisocyanate, xylylene diisocyanate, tetramethylxylylene diisocyanate, pentamethylene diisocyanate, and combinations thereof; wherein the isocyanate-functionalised, aliphatic polyurethane prepolymer is derived from a polyester polyol and/or a polyether polyol; wherein the molar ratio of the NCO groups of the aliphatic isocyanate monomers to the HO groups of the polyol from which the isocyanate-functionalised, aliphatic polyurethane prepolymer is derived is from 5:1 to 2:1; and
   ii) a further aliphatic polyisocyanate selected from the group consisting of aliphatic polyisocyanate trimers, aliphatic polyisocyanate allophanates, aliphatic polyisocyanate biurets, aliphatic polyisocyanate oligomers, aliphatic polyisocyanate uretdiones, and combinations thereof; and
b) a polyol crosslinker, wherein the polyol crosslinker is a linear or branched polyether polyol and/or a linear or branched polyester polyol; wherein the amount of free isocyanate monomer present in the polyurethane prepolymer is less than or equal to 0.1% (w/w) of said prepolymer; and wherein the polyol crosslinker does not comprise a silane additive capable of reacting with isocyanates.

The adhesive kit of the invention is a two-pack adhesive kit.

The invention further provides a laminate adhesive comprising the components of the solvent-free, lamination adhesive kit of the invention mixed together in a single composition. The invention further provides a retort pouch comprising a laminate adhesive formed from the components of the kit of the invention.

The invention further provides a method of providing a multi-laminate structure, comprising forming a laminate adhesive from the components of the kit of the invention and applying the composition onto a flexible film.

The invention further provides a method of making the kit of the invention, comprising the steps of:
a) reacting aliphatic isocyanate monomers with a polyester polyol and/or polyether polyol to obtain an isocyanate-functionalised, aliphatic polyurethane prepolymer comprising monomeric units derived from said aliphatic isocyanate monomers; wherein an aliphatic polyurethane prepolymer is formed from aliphatic isocyanates, wherein the identity of the isocyanate alone dictates the polyurethane as being aliphatic or aromatic, wherein an aliphatic isocyanate is one wherein the isocyanate group(s) is/are not directly attached to an aromatic ring;
   wherein the aliphatic isocyanate monomers are diisocyanates selected from the group consisting of hexamethylene diisocyanate, isophorone diisocyanate, methylene dicyclohexyl diisocyanate, xylylene diisocyanate, tetramethylxylylene diisocyanate, pentamethylene diisocyanate, and combinations thereof;
   wherein the molar ratio of the NCO groups of the aliphatic isocyanate monomers to the HO groups of the polyol from which the isocyanate-functionalised, aliphatic polyurethane prepolymer is derived is from 5:1 to 2:1;
b) reducing the residual isocyanate monomer present in the aliphatic polyurethane prepolymer to less than 0.1% (w/w) of the prepolymer;
c) introducing a further aliphatic polyisocyanate selected from the group consisting of aliphatic polyisocyanate trimers, aliphatic polyisocyanate allophanates, aliphatic polyisocyanate biurets, aliphatic polyisocyanate oligomers, aliphatic polyisocyanate uretdiones, and combinations thereof; and
d) introducing a polyol crosslinker to the kit; wherein the polyol crosslinker is a linear or branched polyether polyol and/or a linear or branched polyester polyol; wherein the polyol crosslinker does not comprise a silane additive capable of reacting with isocyanates.

The invention further provides the use of the kit of the invention for forming a laminate adhesive. The invention further provides the use of the kit of the invention for improving bonding strength under retort conditions of a multi-laminate structure formed from a flexible film and a laminate adhesive formed from the kit of the invention. The improvements are relative to a multi-laminate structure formed from the same flexible film and a laminate adhesive that is not formed from the kit of the invention. Bonding strength is the strength required to separate at least two layers of the multi-laminate structure that are joined together with said adhesive and is measured at room temperature (25 C°) and at 100 mm/min.

### DETAILED DESCRIPTION OF THE INVENTION

### Definitions

*Aromatic monomer =* a monomer wherein the polymerisable functional group is directly connected to an aromatic group.
*Aliphatic monomer =* a monomer wherein the polymerisable functional group(s) is/are not directly connected to an aromatic group.
*Aromatic isocyanates* = isocyanates comprising at least one isocyanate (-NCO) group directly attached to an aromatic ring.
*Aliphatic isocyanates* = isocyanates wherein the isocyanate (-NCO) group(s) is/are not directly attached to an aromatic ring. Aliphatic isocyanates include alicyclic isocyanates. Aliphatic isocyanates can thus include aromatic rings provided the isocyanate group(s) is/are not directly attached to the aromatic ring, e.g., xylylene diisocyanate.
*Aromatic polyurethane* = polyurethane formed from aromatic isocyanates. The skilled person would appreciate that it is the identity of the isocyanate alone (being either aliphatic or aromatic) that dictates the nature of polyurethane as being either aliphatic or aromatic. For the purposes of the present invention, aliphatic polyurethane prepolymers are derived from 95mol% or greater of aliphatic isocyanate monomers, relative to the total moles of isocyanate monomers incorporated into the prepolymer.
*Aliphatic polyurethane* = polyurethane formed from aliphatic isocyanates. The skilled person would appreciate that it is the identity of the isocyanate alone (being either aliphatic or aromatic) that dictates the nature of polyurethane as being either aliphatic or aromatic. For the purposes of the present invention, aliphatic polyurethane prepolymers are derived from 95mol% or greater of aliphatic isocyanate monomers, relative to the total moles of isocyanate monomers incorporated into the prepolymer.
*Aromatic-Aliphatic polyurethane* = polyurethane formed from aromatic and aliphatic isocyanates. For the purposes of the present invention, aromatic-aliphatic polyurethane prepolymers are derived from greater than 5 mol% to less than 95mol% of aromatic isocyanate monomers, and greater than 5 mol% to less than 95mol% of aliphatic isocyanate monomers relative to the total moles of isocyanate monomers incorporated into the prepolymer.
*Aromatic carboxylic acid =* a carboxylic acid comprising at least one acid (-COOH) group directly attached to an aromatic ring.
*Aliphatic carboxylic acid =* a carboxylic acid wherein the carboxylic acid group(s) (-COOH) is/are not directly attached an aromatic ring. Aliphatic carboxylic acids include alicyclic carboxylic acids. Aliphatic carboxylic acids can thus include aromatic rings provided the carboxylic acid group(s) is/are not directly attached to the aromatic rings. *Free isocyanate monomer =* a monomeric isocyanate species that has not undergone a reaction with a comonomer, e.g., a polyol. Unreacted starting material from the polymerisation reaction, e.g., that used to form the polyurethane prepolymer.
*Solvent free* = comprising 5wt% or less of any solvent.
*Retort pouch* = Type of food packaging made from a laminate of flexible plastic
*Retort conditions* = methods of cooking and sterilization of food in retort packaging, typically involves heating at elevated temperatures, e.g., 115 to 125 °C for a period of time, e.g., 20-60 minutes.
*Two-pack adhesive* = an adhesive composition comprising two components, with one component inducing crosslinker of the other component.
*One-pack adhesive* = an adhesive composition comprising one component, which typically undergoes crosslinking through reaction with residual moisture.
*PET =* PolyEthylene Terephthalate
*PE* = PolyEthylene
*ALU =* Aluminium
*CPP =* Cast PolyProylene
*OPA* = Nylon
*AlOx* = Aluminium oxide
*SiOx* = Silicon oxide
*OPP* = Oriented PolyPropylene
*OPE* = Oriented PolyEthylene
*LDPE* = Low-Density PolyEthylene
*LLDPE =* Linear Low-Density PolyEthylene
*VM-PET* = Vacuum-Metalized Polyethylene Terephthalate
*Methylene dicyclohexyl diisocyanate* includes the isomers: 1-isocyanato-1-[(1-isocyanatocyclohexyl)methyl]cyclohexane and 4,4-diisocyanato dicyclohexylmethane. *Xylylene diisocyanate* includes the regioisomers thereof.

Unless otherwise stated, all ranges include the respective end points. For example, a range of 3 to 9, includes the end points 3 and 9. However, where an end point is defined as being "more than" one value and/or up to "less than" another value, the range does not include the respective end points.

Unless otherwise stated, wt% (w/w) refers to the mass of the component in question in relation to all components present in the composition.

The wt% (w/w) of free isocyanate monomer is the mass of said species in relation to the total mass of the polyurethane prepolymer that is derived from said monomer.

### The Present Invention

The present invention provides an improved two-pack, solvent-free lamination adhesive kit comprising an aliphatic polyurethane prepolymer. The adhesive kit of the invention is suitable for the preparation of flexible packaging laminates that may be used in retort applications.

To the best of the inventors' knowledge, this is the first reported instance of the use of solvent-free, aliphatic, two-pack lamination adhesives in the preparation of flexible, multiply laminates for retort applications, with the laminates resisting thermal processing temperatures of 100°C and greater.

The two-pack, solventless lamination adhesive kit of the present invention comprises an aliphatic isocyanate functional polyurethane prepolymer produced from aliphatic isocyanate diisocyanate monomers. The amount of residual monomer in the polyurethane prepolymer for use in the invention is less than 0.1% (w/w) of said prepolymer. The amount of residual monomer can be reduced by using an evaporator (e.g., wiped film evaporator). The adhesive of the present invention is especially suited to the preparation of flexible packaging laminates used in the manufacture of retortable, pasteurizable, and boilable pouches.

The kit of the invention can therefore be used to improve bonding strength under retort conditions of a multi-laminate structure formed from a flexible film and a laminate adhesive formed from the components of the kit of the invention. The improved bonding strength relates to increased delamination resistance of said laminate structure compared to a comparative laminate structure formed from the same flexible film and a laminate adhesive that is not formed from the components of the kit of the invention.

Retort conditions include heating at 100 °C or higher for a period of 20 minutes, such as heating at 120 °C for 30 minutes or 135 °C for 20 minutes. Retort conditions induce pressure differentials between the pressure inside the retort package and atmospheric pressure, which can put the adhesives used to seal retort packaging under strain. For example, low retort testing may involve heating a retort pouch in an autoclave at around 120 °C for at least 30 minutes, wherein the autoclave is at a pressure of around 1.5 bar. High retort testing may involve heating a retort pouch in an autoclave at around 135 °C for at least 20 minutes, wherein the autoclave is at a pressure of around 2.6 bar.

### Advantages Associated with the Present Invention

The inventors have found that incorporating into a solvent-free, lamination adhesive an aliphatic polyurethane prepolymer for use in the invention, comprising monomeric units derived from aliphatic isocyanate monomers, provides adhesives with improved bonding under retort conditions. The improvements are observed relative to comparative adhesives comprising aromatic polyurethane prepolymers comprising monomeric units derived from aromatic isocyanate monomers.

The adhesive kit of the invention is also improved relative to comparative adhesive kits comprising polyurethane prepolymers comprising residual isocyanate monomer content above that required by the present invention.

The aliphatic, two-pack solvent-free lamination adhesive kit of the present invention is suitable for the preparation of flexible packaging laminates that are resistant to retort conditions of ≥100°C for periods of ≥10 minutes (i.e., from seals that do not fail under said conditions). To date, two-pack, solvent-free lamination adhesives have found widespread use in less demanding applications but have failed in retort applications.

Moreover, a consequence of using aliphatic isocyanate monomers in the preparation of the adhesives for use in the present invention is that the risk associated with the generation of harmful primary aromatic amines is removed. Such aromatic amines can be produced when adhesives comprising polyurethane prepolymers formed from aromatic di-isocyanates are placed under retort conditions. Using an aliphatic isocyanate-based adhesive reduces the risk of forming primary aromatic amines under retort conditions.

A further advantage is that the amount of free diisocyanate monomer in the polyurethane prepolymer component of the two-pack adhesive kit of the invention is less than 0.1% (w/w), based on the weight of the polyurethane prepolymer. This is important with respect to the hazards relating to the prepolymer. In particular, reducing the free diisocyanate monomer content in the polyurethane prepolymer to less than 0.1% (w/w) ensures that the hazards associated with monomeric isocyanates (e.g., diisocyanates such as hexamethylene diisocyanate), can be alleviated, to the extent that, under the current Classification, Labelling and Packaging of Substances and Mixtures (CLP) Guidelines, the prepolymer is free of any labelling relating to hazards associated with free diisocyanate monomer. This is advantageous as it allows for easier handling of the inventive adhesive kit compared with conventional two-pack lamination adhesive kits/compositions that comprise greater amounts of residual isocyanates. Reducing the amount of free monomeric isocyanates, such as xylylene diisocyanate, present in an adhesive, for example, using a wiped film evaporator, has not been previously reported.

Moreover, even if aliphatic isocyanate monomers are used, affording primary aliphatic amines when subjected to retort conditions, the reduction of the amounts of free isocyanate monomer to less than 0.1% (w/w) nevertheless minimizes the risks associated with the presence of migratable species in the adhesive compositions.

Solvent-free lamination adhesives do not comprise organic solvents or water in order to reduce the viscosity to a level such that the material can be applied with a lamination machine at temperatures of <90°C, e.g., <80°C. However, as a result of the above-mentioned advantages, the inventors have found a way of producing solvent-free adhesives, wherein the required viscosity for use in a lamination machine at said temperatures can be achieved via the control of the molecular weight of the components, and without the problems typically associated with the presence of migratable, low-molecular weight/small molecule components.

The solvent-free laminate adhesive kit of the invention comprises 5wt% or less of any solvent. Preferably, the solvent-free laminate adhesive kit comprises 3wt% or less of any solvent, and more preferably 1wt% or less of any solvent. Even more preferably, the solvent-free laminate adhesive kit of the invention is substantially free of solvent.

Furthermore, the inventors have also discovered that incorporating a polyester polyol comprising monomeric units derived from a mixture of aromatic monomers and aliphatic monomers into the polyurethane prepolymer for use with the invention, improves its mechanical properties.

The two-component adhesive kit of the invention provides adhesives with the further advantages of having stronger bonding, better chemical resistance, and quicker cure, when compared to analogues one-pack adhesive compositions. One-pack adhesives cure using only the moisture present in/on the substrate and in the air. Typically, one-pack adhesives work well with paper substrates laminated either to paper or film. However, with film-to-film lamination or film-to-aluminium lamination, for example, the reaction and bond strength development of one-pack adhesives can be very slow, as there is not as much moisture available and/or it is difficult for the moisture to reach the isocyanate.

Moreover, a catalyst (e.g., ethyl morpholine, DMDEE = 2,2-Dimorpholinodiethylether, or another tertiary amine containing compound, or a metallic salt) is typically added to one-pack adhesives in order to compensate for the slower curing speeds by making the isocyanate group more reactive/sensitive to moisture A two-pack adhesive does not require a catalyst, which means that the amounts of migratable species can be further reduced relative to comparative one-pack adhesives. Instead, the isocyanate groups in two-pack adhesives react with a polyol that is intimately mixed into the polyurethane prepolymer and provides readily available reactive sites. However, the isocyanate groups of the polyurethane prepolymers of two-pack adhesives can also react with residual moisture.

### Aliphatic Polyurethane Prepolymer

Polyurethanes with NCO terminal groups are typically obtained by reacting polyfunctional alcohols with an excess of polyisocyanate monomer(s). Generally, diisocyanates are used in order to obtain a prepolymer with a molecular weight and viscosity compatible with use in a lamination machine at temperatures of 80-90°C. This is because diisocyanates (as opposed to isocyanates of higher functionality) are only capable of reacting with two polyol species and thus do not form crosslinks.

The polyurethane prepolymer for use in the present invention is characterized by having a viscosity at 80°C ranging from 800 mPas to 20,000 mPas, or preferably 1,000 mPas to 10,000 mPas, or more preferably 2,000 mPas to 7,000 mPas.

The polyurethane prepolymer for use in the present invention preferably has a content of reactive isocyanate groups (%NCO) ranging from 3% to 16%, or more preferably from 5% to 10%.

The skilled person will appreciate that while the advantages associated with the present invention derive from the use of an aliphatic polyurethane precursor comprising monomeric units derived from aliphatic isocyanates, this does not exclude the presence of a small amount of non-aliphatic isocyanate in the prepolymer, provided that such an amount does not affect these advantageous properties. Accordingly, for the purposes of the present invention, an "aliphatic polyurethane prepolymer" is derived from 95mol% or greater of aliphatic isocyanate monomers, relative to the total moles of isocyanate monomers incorporated into the prepolymer. Preferably, the aliphatic polyurethane prepolymer for use in the invention is derived from greater than 98mol%, more preferably greater than 99 mol%, aliphatic isocyanate monomers, relative to the total moles of isocyanate monomers incorporated into the prepolymer. Most preferably, the only isocyanate monomers incorporated into the aliphatic polyurethane prepolymer for use in the invention are aliphatic isocyanate monomers.

A certain amount of residual diisocyanate monomers (due to the use of a stoichiometric excess) will remain present in the reaction mixture at the end of the reaction, regardless of reaction time. The aliphatic polyurethane prepolymer for use in the invention is isocyanate-functionalised, such that reactive NCO groups are attached to the prepolymer. The aliphatic polyurethane prepolymer for use in the invention comprises at least two isocyanate groups per prepolymer. The aliphatic polyurethane prepolymer for use in the invention is preferably difunctionalised with isocyanate groups, such as wherein the aliphatic polyurethane prepolymer for use in the invention is linear and comprises an isocyanate group at either terminus.

The polyurethane prepolymer for use in the invention may comprise three or more isocyanate groups per prepolymer, such as four or more, or five or more isocyanate groups per prepolymer.

The polyurethane prepolymer is preferably linear. For the purposes of the present invention, a "linear" polyurethane prepolymer is typically derived from difunctional isocyanates and difunctional polyols, such that each isocyanate derived moiety is covalently linked to a maximum of two polyols and each polyol derived moiety is covalently linked to a maximum of two isocyanates. A linear polyurethane prepolymer may comprise monomeric components that are in themselves branched, such as a branched glycol.

The aliphatic polyurethane prepolymer for use in the invention is preferably derived from a polyester polyol and more preferably from polyester polyol comprising monomeric units derived from aromatic monomers, such as aromatic dicarboxylic acids.

It is preferred that of the polyol components used to make the polyurethane prepolymer for use in the invention, at least 50wt% are polyester polyols, such as at least 60wt%, at least 70wt%, more preferably at least 80wt%, or at least 90wt% are polyester polyols. It is more preferred that all polyols used to make the polyurethane prepolymer for use in the invention are polyester polyols. The inventors have found that polyester polyols provide desirable high-temperature mechanical properties to the polyurethane prepolymers for use in the invention.

The molar ratio of the NCO groups of the aliphatic isocyanate monomers used to make the polyurethane prepolymer for use in the invention to the HO groups of the polyol used to make the polyurethane prepolymer for use in the invention is from 5:1 to 2:1. Preferably, the molar ratio of the NCO groups of the aliphatic isocyanate monomers used to make the polyurethane prepolymer for use in the invention to the HO groups of the polyol used to make the polyurethane prepolymer for use in the invention is from 4:1 to 2:1, such as from 3:1 to 2:1.

The ratio of the NCO:OH groups of the isocyanates and polyols used to make the prepolymer for use in the two-pack adhesive kits of the invention can be lower than that required to one-pack adhesives that rely on residual moisture content to cure. Without wishing to be bound by theory, a lower NCO:OH ratio can be used when making polyurethane prepolymers for use in two-pack adhesives; the lower ratio results in polyurethane prepolymers of higher molecular weight and viscosity, which can function effectively when combined with a polyol crosslinker. In contrast, a higher NCO:OH ratio must be used when making polyurethane prepolymers for use in one-pack adhesives; the excess NCO affords polyurethane prepolymers of lower molecular weight and thus of sufficiently low viscosity for use in one-pack adhesive applications. Excess isocyanate monomer must then be stripped from the one-pack adhesive after use.

### Reduction of free isocyanate monomer content

Even at room temperature, diisocyanates such as hexamethylene diisocyanate (HDI), isophorone diisocyanate (IPDI), toluene diisocyanate (TDI) and diphenylmethane diisocyanate (MDI) have a significant vapor pressure. This gives rise to serious health risks at the application stage, as these species are toxic due to their sensitizing and irritant actions. Users are required by law to practice specific measures to protect personnel during use, involving significant additional equipment, such as that designed to keep the air breathable and/or to maintain these substances at concentrations below the maximum allowed in the workplace. Users are therefore required to install expensive protection apparatus for personnel exposed to such product vapors and/or the aerosols developed by the dynamic application conditions on rotary machines.

Reagents of this type are regulated by hazardous substances legislation and are required to be labelled as hazardous materials. The labelling obligation is accompanied by the requirement to take special packaging and transport measures.

Many polyurethane adhesives of the art comprise more than 0.1% (w/w) (the threshold prescribed by the CLP Regulation, below which the product is not considered hazardous) of residual isocyanate monomer (usually volatile diisocyanates, such as free TDI, MDI, or other isocyanate monomers). In particular, when a molar excess of isocyanate functional groups is used relative to the hydroxyl functional groups of the polyol an excess of free isocyanate monomer will remain in the reaction mixture after formation of the polyurethane prepolymer. Unless additional processing steps are taken to remove this excess free monomer, greater than 0.1% (w/w) of free isocyanate monomer will remain in the prepolymer, necessitating the above-mentioned safety precautions. Moreover, if prepolymers comprising greater than 0.1% (w/w) of free isocyanate monomer are used as adhesives for food packaging, contamination of food products with migratable isocyanate monomers can also result.

The solvent-free, lamination adhesive kit of the present invention comprises an isocyanate-functional, aliphatic, polyurethane component that has an amount of free isocyanate monomer of less than or equal to 0.1% (w/w) relative to said prepolymer. For example, the isocyanate functional polyurethane component preferably comprises less than 0.1% (w/w), or 0.08% (w/w) or less of free isocyanate monomer. The polyurethane prepolymer is subjected to additional processing steps outlined herein, in order to reduce the amount of free isocyanate monomer to that required by the present invention.

The low amounts of free monomeric isocyanate monomer required by the present invention may be achieved by stripping unreacted isocyanate monomer from the polyurethane prepolymer using an evaporated (e.g., a wiped film evaporator). The evaporator may be used at temperatures of 100-250°C, preferably 120-200°C, and more preferably 140-180°C. The evaporator may operate under a pressure of less than 5 mbar, preferably less than 0.5 mbar, and more preferably less than 0.1 mbar. The evaporator may be operated for a total contact time of less than 30 min, preferably less than 15 min, and more preferably less than 5 min. The evaporator may be operated at a pressure of 0.1 mbar or less and at a temperature of 140°C-180 °C.

### Making the Polyurethane Prepolymer for Use in the Invention

The polyurethane prepolymer for use in the present invention may be obtained by a process comprising the following protocol:
a) reacting an aliphatic diisocyanate with a polyester polyol and/or a polyether polyol, each having a number average molecular weight (Mₙ) of ≤1000 g/mol, in an NCO:OH molar ratio of greater than 2.0:1.0;
   i. optionally using a catalyst; and
   ii. optionally using an acid compound,
   to obtain an NCO-terminated prepolymer; and
b) subjecting the NCO-terminated prepolymer obtained in step a) to one or more stripping stages, using a series of one or more wiped-film evaporators and/or short-path evaporators.

Steps a) and b) are conducted according to known procedures and operating conditions.

The final polyurethane prepolymer thus obtained has the following characteristics after removal of the free isocyanate monomer:
- %NCO of >7%
- A viscosity at 50°C of < 30,000 mPas
- A wt% free diisocyanate monomer of <0.1%

The method of making the polyurethane prepolymer for use in the invention preferably does not require a solvent. In other words, the polyurethane prepolymer for use in the invention may be formed by using only the reagents that are themselves incorporated into the prepolymer.

### Aliphatic Isocyanates for use in Making the Polyurethane Prepolymer

The aliphatic isocyanates used for the preparation of the isocyanate-functionalized, aliphatic polyurethane prepolymer for use in the invention are selected from the group consisting of hexamethylene diisocyanate (HDI), isophorone diisocyanate (IPDI), methylene dicyclohexyl diisocyanate, xylylene diisocyanate (XDI), tetramethyl xylylene diisocyanate (TMXDI), pentamethylene diisocyanate (PDI), and combinations of any of the above.

Preferably, the aliphatic isocyanate monomer for use in the invention is a diisocyanate selected from the group consisting of isophorone diisocyanate (IPDI) and isomeric mixtures thereof, 1,6-hexane diisocyanate (HDI), xylylene diisocyanate (XDI), and combinations thereof. More preferably, the aliphatic isocyanate monomer for use in the invention is xylylene diisocyanate (XDI).

The aliphatic Isocyanates for use In the Invention comprise Isocyanate groups that are not directly attached to an aromatic ring. Accordingly, the aliphatic isocyanates for use in the invention may comprise aromatic groups, provided the isocyanate groups are not directly attached.

### Polyol for making the Polyurethane Prepolymer for use in the Invention

The polyol for use in making the isocyanate-functionalised, aliphatic polyurethane prepolymer for use in the invention is selected from the group consisting of a polyester polyol, a polyether polyol, and combinations thereof. The polyol for use in the invention is preferably a polyester polyol, and more preferably a polyester polyol comprising monomer units derived from aromatic monomers.

The polyester polyol for use in the invention has been selected to provide a desirable combination of properties. In particular, the polyol is selected so that when incorporated into the polyurethane prepolymer for use in the invention, the polyurethane prepolymer has desirable mechanical properties at high temperatures and a final viscosity that is suitable for use in a lamination machine at 80-90°C.

The inventors have found a particularly preferred polyester polyol for use in the invention is characterized as follows:
1. comprises a mixture of aromatic and aliphatic dicarboxylic acids; and/or
2. comprises a mixture of linear and branched short chain glycols; and/or
3. has an OH number ranging from 110 to 400 mgKOH/g; and/or
4. has a viscosity ranging from 500 to 10,000 mPas at 23°C.

While the polyester polyol for use in the invention may comprise other components, such as polyether segments, its preferred that the at least 50mol% of the monomeric units present are polyester monomeric units, such as at least 60 mol%, at least 70 mol%, preferably at least 80 mol%, or more preferably at least 90 mol% of the monomeric units present are polyester monomeric units. The polyester polyol for use in the invention may only comprise polyester monomeric units.

When used to formulate the lamination adhesive of the invention, the inventors found that a polyurethane prepolymer made with a polyester polyol backbone is advantageous because the resulting polyurethane prepolymer exhibits improved mechanical properties (e.g., tear strength) at the typical temperatures used for retorting processes (100-135°C).

The polyester and/or polyether polyols for use in the invention are preferably linear. In the context of the invention, a "linear" polyester polyol is derived from difunctional (and optionally also monofunctional) monomers, such that each monomer unit can react with a maximum of two other monomers. In other words, the maximum functionality of the monomers is two. For example, a dicarboxylic acid and a diol make a linear polyester.

### Aromatic and Aliphatic Monomers

When used to formulate the polyurethane prepolymer for use in the invention, a polyester polyol comprising at least 10wt% monomeric units derived from aromatic monomers is preferred. More preferably, at least 20wt% of the monomeric units of the polyester polyol are derived from aromatic monomers. This is because, in general, polyurethane prepolymers derived from such polyols exhibit improved mechanical properties at the typical temperatures for retorting process and, in particular, improved bonding strength under retort conditions. Without wishing to be bound by theory, the inventors postulate that the improvements relate to higher hydrolysis resistance and higher glass transition temperature (T_{g}) of these polyester polyols.

Polyurethanes made with a polyester polyol backbone are generally more viscous than those made with a polyether backbone; and polyester polyols containing aromatic rings in the backbone are even more viscous than pure aliphatic polyester polyols. The inventors have found that by incorporating a mixture of aliphatic and aromatic groups into the polyester polyol for use in the invention provides polyurethane prepolymers with both improved mechanical properties and viscosities suitable for use in adhesive laminate applications.

The polyester polyol for use in the invention may be derived from 10 to 55wt% aromatic monomers, preferably 15 to 45wt%, and more preferably 15 to 35wt%, such as 20 to 30wt% aromatic monomers, relative to the total wt% of the polyester polyol. The aromatic monomers are preferably aromatic dicarboxylic acids, such as isophthalic acid.

The polyester polyol for use in the invention may be derived from 45wt% to 90wt% aliphatic monomers, preferably 55 to 85wt%, and more preferably 65 to 85wt% aliphatic monomers, relative to the total wt% of the polyester polyol. The aliphatic monomers are preferably aliphatic dicarboxylic acids, such as sebacic acid. The aliphatic monomers are also preferably aliphatic polyols, such as aliphatic glycols and diols.

### Polyols used to make the polyester polyol.

The polyol used to make the polyester polyol is preferably a glycol and/or diol. The glycols and diols used to make the polyester polyol are preferably selected from the group consisting of neopentyl glycol, 1,6-hexanediol, 3-methyl,1-5-pentane diol, monoethylene glycol, and combinations thereof.

The polyester polyol for use in the invention may comprise 15 to 35% of monomeric units derived from aromatic dicarboxylic acids and 65 to 85wt% of monomeric units derived from aliphatic dicarboxylic acids and aliphatic glycols and diols.

The polyester polyol for use in the invention may be formed from 10 to 55wt% aromatic monomers, preferably 15 to 45wt%, and more preferably 15 to 35wt%, such as 20 to 30wt% of aromatic dicarboxylic acids relative to the total amount of monomers used to form the polyester polyol. The polyester polyol for use in the invention may be formed from 45wt% to 90wt% of aliphatic dicarboxylic acids and aliphatic glycols and diols, preferably 55 to 85wt%, and more preferably 65 to 85wt% of aliphatic dicarboxylic acids and aliphatic glycols and diols, relative to the total amount of monomers used to form the polyester polyol.

Aromatic dicarboxylic acids used for the preparation of the polyester polyol are preferably selected from the list consisting of terephthalic acid, isophthalic acid, phthalic anhydride, and combinations thereof. Aliphatic dicarboxylic acids used for the preparation of the polyester polyol are preferably linear C₂-C₁₄ dicarboxylic acids, such as linear C₂-C₁₄ dicarboxylic acids selected from the group consisting of succinic acid, glutaric acid, adipic acid, sebacic acid, azelaic acid, and combinations thereof.

The weight ratio of aromatic dicarboxylic acids:aliphatic dicarboxylic acids incorporated into the polyol may be from 10:1 to 1:10, preferably 4:1 to 1:4, and more preferably 2:1 to 1:2. The weight ratio of aromatic: aliphatic dicarboxylic acids incorporated into the polyol for use in the invention may be 1.5:1 to 1:1.5, such as being incorporated in substantially equal wt%.

### Short Chain Glycols

Short-chain glycols suitable for the preparation of the polyester polyol for use in the invention include but are not limited to linear C₁-C₆ diols, such as 1,2 ethanediol, 1,3 propanediol, 1,4 butanediol, 1,5 pentanediol, 1,6 hexanediol, and combinations thereof.

Short chain glycols comprising alkyl substituents are also suitable for the preparation of the polyester polyol for use in the invention and are preferably selected from the C₁-C₆ diols: 1,2 propanediol, 1,2 butanediol, 1,3 butanediol, neopentylglycol, 1,3 methylpentanediol, 2-methyl-1,3-propanediol, and combinations thereof.

The glycols for use in the invention preferably have a molecular weight of less than 500 gmol⁻¹, such as less than 300 gmol⁻¹ and preferably less than 200 gmol⁻¹.

The weight percent ratio of linear: branched short chain glycols incorporated into the polyol for use in the invention may be from 10:1 to 1:10, preferably 4:1 to 1:4, and more preferably 2:1 to 1:2. The weight ratio of linear:branched short chain glycols dicarboxylic acids incorporated into the polyol for use in the invention may be 1.5:1 to 1:1.5, such as being incorporated in substantially equal wt%.

### Polyurethane Prepolymer Additives

The polyurethane prepolymer for use in the invention can be used "as is" (i.e., in the form afforded from the above-mentioned method) or after the addition of additives, such as adhesion promoters, viscosity and rheology regulators, water scavengers, anti-skinning agents, and anti-bubbling agents.

In particular, the use of an adhesion promoter, for example silanes containing groups that react with isocyanate groups (such as 3-aminopropyltriethoxysilane), is advantageous when the adhesive system is to be used on metal or metallized substrates such as aluminum. Such an adhesion prompter can also be incorporated into the polyol crosslinker. However, such a component is not essential to the adhesive kit of the invention. The inventors have found that the adhesive of the invention performs well under retort conditions, even in the absence of a silane additive that reacts with the isocyanates. Accordingly, the polyol functional crosslinker for use in the invention do not comprise a silane compound capable of reacting with isocyanates.

### Further Aliphatic Polyisocyanate(s)

The polyurethane prepolymer for use in the invention is also formulated with the addition of one or more further aliphatic polyisocyanates to further reduce the viscosity of the final system, i.e., a further aliphatic polyisocyanate(s) is incorporated into part a) of the kit of the invention. The further aliphatic polyisocyanate(s) for use in the invention may be low viscosity, i.e., the further aliphatic polyisocyanate(s) for use in the invention may have a viscosity at 23 °C of 3,000 mPas or less, preferably 2,000 mPas or less, such as 1,000 or less, or 500 or less.

The further aliphatic polyisocyanate(s) is selected from the group consisting of aliphatic polyisocyanate trimers (i.e., isocyanurates), aliphatic polyisocyanate allophanates, aliphatic polyisocyanate oligomers, aliphatic polyisocyanate biurets, aliphatic polyisocyanate uretdiones, and combinations thereof.

Specific examples of these compounds include hexamethylenediisocyanate (HDI) trimers (e.g., POLURENE MT100, POLURENE MT100LV, POLURENE MT100LLV, Wannate HT 100 and Wannatye HT 600 from Wanhua), hexamethylenediisocyanate (HDI) allophanates, hexamethylenediisocyanate biuret, uretdione/allophanate modified HDI oligomers, and HDI oligomers (e.g. Polurgreen MT 100 01, Polurgreen MT 100 LV 01, Polurgreen MT 100 LLV 01, Tolonate HDT, Tolonate HDT LV, Tolonate HDT LV2, Tolonate XFLO 100, Basonat HI, Basonat HI-2000, Basonat HA3000, Desmodur ULTRA N 3300, Desmdur ULTRA N 3600, Desmodur ULTRA N 3900, Desmodur XP2860). An allophanate is an isocyanate dimer.

More preferably, the further aliphatic polyisocyanate(s) is selected from the group consisting of aliphatic polyisocyanate trimers, such as HDI trimer, aliphatic polyisocyanate allophanates, such as HDI allophanate, and combinations thereof. Even more preferably, the further aliphatic polyisocyanate(s) is an aliphatic polyisocyanate trimer, such as HDI trimer.

The aliphatic polyurethane prepolymer for use in the invention may be incorporated into a composition comprising the further polyisocyanate(s) for use in the invention. The wt% ratio of the polyurethane prepolymer for use in the invention to the further polyisocyanate(s) for use in the invention may be from 8:1 to 1:1, more preferably from 5:1 to 2:1, and even more preferably from 3:1 to 2:1.

### Catalysts

If desired, the urethane formation reaction can be accelerated by adding suitable catalysts during preparation stage. Catalysts suitable for the urethanization reaction are known and comprise amines and organometallic compounds. However, such a component is not essential to the adhesive kit of the invention. The inventors have found that the adhesive of the invention performs well under retort conditions, even in the absence of a catalyst. Accordingly, the polyurethane prepolymer for use in the invention (and kit of the invention) may not comprise a catalyst.

Examples of catalysts suitable for use in the invention include triethylamine, tributylamine, dimethylbenzylamine, dicyclohexylmethylamine, dimethylcyclohexylamine, N,N,N',N-tetramethyldiamine methyl ether, bis(dimethylaminopropyl)urea, N-methyl or N-ethyl morpholine, N,N'-dimorpholinodiethyl ether (DMDEE), N-cyclohexylmorpholine, N,N,N',N'-tetramethylethylenediamine, N,N,N',N'-tetramethylbutylenediamine, N,N,N',N'-tetramethyl-1,6-hexanediamine, pentamethyldiethylenetriamine, dimethylpiperazine, N-dimethylaminoethylpiperidine, 1,2-dimethylimidazol, N-hydroxypropylimidazol, 1-azabicyclo-[2,2,0]-octane, 1,4-diazabicyclo-[2,2,2]octane (DABCO), alkanolamines such as triethanolamine, triisopropanolamine, N-methyl and N-ethyl diethanolamine, dimethylaminoethanol, 2-(N,N'-dimethylaminoethoxy)ethanol, N,N',N-tris-(dialkylaminoalkyl)-hexahydrothiazines such as N,N',N-tris/(dimethylaminopropyl)-s-hexa-hydrothazine, tetraalkylammonium hydroxides such as tetramethyl ammonium hydroxide, alkaline hydroxides such as sodium hydroxide, alkaline alcoholates such as sodium methylate, alkaline salts of long-chain fatty acids, iron(II) chloride, zinc chloride, lead octoate, tin salts such as tin dioctate, tin diethylhexanoate, dibutyl tin dilaurate, dibutyldilauryl tin mercaptide, titanium compounds such as titanium(IV) butylate, organometallic compounds of tin, lead, iron, titanium, bismuth and zirconium, tin oxides and sulphides, and bismuth carboxylates.

The polyurethane prepolymer adhesive obtained as described above, characterized by a free monomer below 0.1% by weight ("free monomer"), does not require hazard labelling, as it is completely safe for the user and contains no substances liable to migrate from the packaging to the food (primary aromatic amines and cyclic esters), even when the packaged product has a long shelf life.

### Polyol crosslinker

The polyol crosslinker for use in the kit of the present invention is suitable for curing the isocyanate-functionalised, aliphatic polyurethane prepolymer for use in the invention.

The polyol crosslinker for use in the kit of the present invention is selected from linear or branched polyethers and/or linear or branched polyester polyols. The polyol crosslinker for use in the invention may be a mixture of polyester polyol and polyether polyol. The polyol crosslinker for use in the invention is preferably a polyester polyol.

The polyol crosslinker for use in the invention may be a polyester polyol formed from glycols and dicarboxylic acids. The glycol may be selected from the group consisting of ethylene glycol, diethylene glycol, triethylene glycol, propylene glycol, neopentyl glycol, tetramethylene glycol, polyethylene glycol (including methyl ether thereof), polypropylene glycol (including methyl ether thereof), and polybutylene glycol (including methyl ether thereof). The dicarboxylic acid may be selected from the group consisting of the aliphatic dicarboxylic acids malonic acid, succinic acid, glutaric acid, adipic acid, pimelic acid, suberic acid, azelaic acid, sebacic acid, methylsuccinic acid, aspartic acid, malic acid, and the aromatic dicarboxylic acids terephthalic acid, and isophthalic acid. The polyester polyol may also be derived from non-glycol polyols including trimethylolpropane.

The polyol crosslinker for use in the invention may be a polyester polyol comprising tertiary amine groups in the backbone.

The polyol crosslinker, e.g., the polyester polyol, for use in the invention may have a number average molecular weight of 200 to 10,000 Da, preferably 400 to 5,000 Da, and more preferably 500 to 2000 Da.

The polyol crosslinker for use in the invention may be incorporated into a crosslinking composition (as part b) that further comprises a polyether monool (i.e., comprising a single hydroxyl substituent, e.g., polypropylene glycol monoalkyl ether). The polyether monool is preferably selected from the list consisting of polyethylene glycol monoalkyl ether, polypropylene glycol monoalkyl ether, polybutylene glycol monoalkyl ether, and combinations thereof. For example, the polyol crosslinker for use as part b) in the invention may be incorporated into a crosslinking composition that further comprises polypropylene glycol monomethyl ether.

The polyether monool may have a number average molecular weight of 200 to 2000 Da, such as 200 to 1000 Da, or 200 to 500 Da.

When present, the polyether monool (e.g., polypropylene glycol monoalkyl ether) may be incorporated into the polyol crosslinker composition of part b) in amount of up to 50wt% relative to the total weight of both the polyol crosslinker and polyether monool, for example up to 40wt%. In other words, the wt% ratio of the polyol crosslinker of part b) to the polyether monool (when present) may be from 100:0 to 50:50, such as 80:20 to 50:50, or 70:30 to 60:40, such as around 60:40.

The kit of the invention comprises the aliphatic polyurethane prepolymer and optionally the further polyisocyanate as part a) and the polyol crosslinker as part b). The wt% ratio of part a) to part b) may be from 5:1 to 1:2, and preferably from 4:1 to 1:1, and more preferably from 3:1 to 1:1.

### Laminates

There is a significant market related to adhesively formed multiply laminates for retort applications. Typical structures include the following combinations of substrates PET/CPP, PET/Al/CPP, PET/Al/OPA/CPP, PET-SiOx/CPP, PET-AlOx/CPP, OPA/CPP, OPA/LDPE, PET/Al/LDPE, VM-PET, AlOx-PET, SiOx-PET, AlOx-OPP, SiOx-OPP, AlOx-OPE, SiOx-OPE, AlOx-OPA, SiOx-OPA, PET/OPA/Al/CPP, OPA/VM-PET/LLDPE, PET/OPA/CPP, PET/OPA-SiOx/CPP, PET/OPA-AlOx/CPP, PET-SiOx/OPA/CPP, PET-AlOx/OPA/CPP, OPP/CPP, OPP-SiOx/OPA/CPP, OPP-AlOx/OPA/CPP, OPE-SiOx/OPA/CPP, OPE-AlOx/OPA/CPP, OPA-SiOx/OPA/CPP, OPA-AlOx/OPA/CPP.

The adhesive kit of the invention can be used with any of the above-mentioned substrates to form laminates.

### Retort Conditions

The lamination adhesive kit of the invention provides laminates with improved bonding strength under retort conditions relative to comparative laminates. Retort conditions involve placing a sealed retort package under temperatures for a period of time. For example, retort conditions may involve heating a package at 115 °C to 150 °C for 10 to 60 mins, such as heating a package at 120 °C to 140 °C for 20 to 35 minutes. Retort conditions may involve pressures of 1.5 to 4 bar, such as 1.5 to 3 bar. Retort conditions may involve heating at 120 °C for 30 minutes at 1.5 bar, or heating at 135 °C for 20 minutes at 2.6 bar.

### EXAMPLES

The invention is defined by the following non-limiting examples, which further illustrate the invention and are not intended, nor should they be interpreted to, limit the scope of the invention.

### Test methods

- Free diisocyanate monomer content (e.g., %HDI, %XDI): Determined by gas chromatography with internal standard according to ASTM D3432. Expressed as wt% relative to total amount of polyurethane prepolymer.
- Reactive NCO group content (%NCO): Determined by back-titration with an excess of n-butylamine acid according to ASTM D2572.
- Viscosity: Determined using Brookfield rotational viscometer Mod. LVDVII according to ASTM D1084 at the temperature specified. Unless otherwise stated, viscosity is measured at 23 °C.
- Hydroxyl Value (OH Number): The number of milligrams of potassium hydroxide required to neutralize the acetic acid taken up on acetylation of one gram of a chemical substance that contains free hydroxyl groups. The standard procedure as defined in ISO 4629-1:2016(E) is used to determine the Hydroxyl value.
- Molecular Weight:
   a) The molecular weight of non-polymeric or oligomeric compounds (i.e., defined monomeric species) is defined and calculated by the molecular structure of the compound. Usually, this is given by the supplier technical data sheet of the monomer or can be found on the webpage of the European Chemical Agency (ECHA).
   b) Oligomeric and polymeric species typically comprise a distribution of chain lengths and thus a distribution of molecular weights. Accordingly, unless otherwise stated, the molecular weight of oligomeric and polymeric species (as well as components existing as a mixture of species with individual molecular weights above 500Da (and thus having a distribution - e.g. vegetable oils)) is measured by Gel Permeation Chromatography (GPC) conducted on a Hewlett-Packard 1050 Series HPLC system equipped with two GPC Ultrastyragel columns, 103 and 104 Å (5 µm mixed, 300 mm x 19 mm, Waters Millipore Corporation, Milford, MA, USA) and THF as the mobile phase. The column temperature is 40 °C. The molecular weight is calculated by comparison with a polystyrene standard. The skilled person will appreciate that this definition of molecular weight applies to polymeric materials which typically have a molecular weight distribution. Unless otherwise stated, the molecular weight reported herein for oligomers and polymers is the number average molecular weight.
- Bonding Strength is the strength required to separate a multi-laminate structure formed from a flexible film and a laminate adhesive formed from the components of an adhesive kit. The multi-laminate structure comprises at least two layers joined together with the laminate adhesive. The bonding strength is measured at room temperature (25 C°) and at 100 mm/min. All other parameters are in accordance with ASTM D3330-F (the 90° Peel test).

Improved bonding strength relates to an increase delamination resistance of a laminate structure from a flexible film and a laminate adhesive formed from the components of the kit of the invention compared to a comparative laminate structure formed from the same flexible film but using a laminate adhesive that is not formed from the components of the kit of the invention.

### Example 1: Synthesis of polyester polyol

The polyester polyol of example 1 is prepared by mixing the following diols and dicarboxylic acids and reacting them in a typical condensation polymerization using an esterification reactor and well-known esterification conditions.

**Table 1: Reagents used to prepare the polyester polyol of example 1.**

| **Components** | **% Range** |
|---|---|
| Isophthalic acid | 20-30 |
| Sebacic Acid | 20-30 |
| Monoethylene Glycol | 10-20 |
| NeoPentyl Glycol | 5-15 |
| 1,6-Hexanediol | 5-15 |
| 3 methyl 1-5 pentane diol | 5-15 |

Example 1 is a typical polyester polyol obtained from reagents incorporated in the above amounts and has the following characteristics:
OH number = 265 mg KOH/g
Viscosity at 23°C = 3,000 mPas

### Example 2: Synthesis of NCO-terminated polyurethane prepolymer

550 Parts of xylylene diisocyanate (XDI) is added to a 1-liter reaction flask equipped with agitator and reflux condenser, continuously fluxed with nitrogen. The mixture is heated at 50°C and 450 parts of Example 1 polyester polyol A (OH-terminated polyester polyol with 2 functional groups and a number average M_{w} of 420 g/mol) are dripped into the mixture in 240 minutes under stirring, monitoring the temperature of the reaction mixture, and adjusting the polyol addition rate to ensure that it never exceeds 60°C.

At the end of the addition the mixture is heated to 80°C for 2 hours until the %NCO is about 15.5%.

The product thus obtained is distilled in a thin-layer evaporator at a pressure of about 0.1 mbar and a temperature of 140°C to remove the unreacted monomer. 760 parts of a transparent colorless liquid with the following characteristics are obtained:
%NCO = 7.6%
Viscosity at 50°C = 18,700 mPas
%XDI = 0.04wt%

### Example 3: Preparation of solvent free aliphatic isocyanate prepolymer with residual monomer level lower than 0.1%.

700 parts of Example 2 is mixed with 300 parts of a low-viscosity HDI trimer with a residual HDI content of <0.1% (Polurgreen MT 100 LV 01) and 1000 parts of a transparent colorless liquid with the following characteristics was obtained:
%NCO = 12.3%
Viscosity at 40°C = 11,000 mPas
%XDI = 0.04%
%HDI = 0.04%

Example 3 is a solvent-free aliphatic isocyanate prepolymer with a residual monomer level lower than 0.1% by weight, prepared following the method previously described . Its performance has been evaluated on PET (12µm)/aluminium (8µm)/ cast polypropylene (CPP) (60µm) triplex structures, comparatively to solvent-free aromatic adhesives. Laminates using the adhesives described in Table 2 below were produced on a Labo Combi 400 laminator made by Nordmeccanica Group, using the following conditions:
Coating weight: 2.5 gsm/dry;
Adhesive Roller Speed: 80;
Adhesive Roller Temp: 50°C;
Application Roller Temp: 50°C
Tension Unwinder A: 23 N;
Tension Unwinder B: 20 N;
Tension Rewinder (Laminate): 28 N;
Coating head pressure: 3 bars;
Nip pressure: 3 bars;
Nip temperature 50°C;
Laminates cured at 20°C for 20 days.

**Table 2: Comparative and inventive adhesive systems and mix ratios**

| Sample | Base (NCO) | Hardener (OH) | Mix ratio (mass) | Description |
|---|---|---|---|---|
| 1 (Comparative) | NS4158A | HA328B | 100 : 50 | Commercial aromatic-aliphatic high-performance solvent-free adhesive |
| 2 (Comparative) | ZA1000 | ZB301 | 100 : 40 | Commercial ultra-low monomer-free solvent-free aromatic adhesive |
| 3 | Example 3 | MP40 | 100 : 70 | Aliphatic retortable solvent-free adhesive prototype cured with various polyols |
| 4 | Example 3 | MP70 | 100 : 85 | |
| 5 | Example 3 | HA450B | 100 : 60 | |
| 6 | Example 3 | ZB301 | 100 : 60 | |

Sunlam NS-4158A (Polyurethane polyisocyanate) / HA-328 (Polyester polyol) is a 2 component, solvent-free, partially aromatic lamination adhesive which can be processed at 50°C. The polyurethane prepolymer (NS-4158A) is aromatic, i.e., the polyurethane comprises monomeric units derived from aromatic isocyanates.

Sunlam ZA-1000 (Polyurethane polyisocyanate) / ZB-301 (Polyester polyol based on propylene glycol, trimethylol propane combined with adipic acid, containing a small amount of a tetraol with tertiary amines on its backbone) is a commercial two component, aromatic, solvent-free, ultra-low isocyanate monomer (<0.1wt%) lamination adhesive, which can be processed at 50-55°C. The polyurethane (ZA-1000) is aromatic, i.e., the polyurethane comprises monomeric units derived from aromatic isocyanates.

MP40 is a 60/40 mixture of DIC Dry HA930 (Polyester Polyol, DIC Graphics Corporation) and Smack MP-40 (Kao Corporation). Smack MP-40 is polypropyleneglycol monomethylether having a molecular weight of *ca.* 260 Da.

MP70 is a 60/40 mixture of DIC Dry HA930 (Polyester Polyol, DIC Graphics Corporation) and Smack MP-70 (Kao Corporation). Smack MP-70 is polypropyleneglycol monomethylether having a molecular weight of *ca.* 450 Da.

Sunlam HA450B is a commercial, solvent-free polyester polyol based on monoethylene glycol, neopentyl glycol, trimethylolpropane combined with isophthalic and adipic acids, which is usually used in combination with aromatic isocyanate-functionalised prepolymers.

ZB301 is a solvent-free polyester polyol.

The bond strengths measured at room temperature, expressed in N/15mm, and measured at 100mm/min, between the Aluminium and the CPP were recorded subsequently to various thermal treatments, the results are presented in the table below:

**Table 3: Bond strengths of selected adhesives before and after pasteurisation and retort**

| Sample | Initial Bond Strength | Bond strength after pasteurisation test (95°C for 1h) | Bond strength after low retort test (121°C for 30min) | Bond strength at RT after high retort test (135°C for 20min) |
|---|---|---|---|---|
| 1 | 5.2 (Ad-Al) | 2.7 (Ad-Al) | 0.5 (Ad-Al) | Delamination |
| 2 | 10 (Alu-F) | 1.6 (Ad-Al) | 0.5 (Ad-Al) | Delamination |
| 3 | 9.5 (Alu-F) | 4.4 (Alu-F) | 5 (Ad-Al) | 4.1 (Ad-Al) |
| 4 | 9.5 (Alu-F) | 4.0 - 4.6 (Ad-Al & Alu-F) | 3.6 - 4 (Ad-Al & Alu-F) | 3. 1 (Ad-Al) |
| 5 | 10 (Alu-F) | 3.6 - 4.2(Ad-Al & Alu-F) | 4.5 (Ad-Al & Alu-F) | 4.3 - 4.6 (Ad-Al & Alu-F) |
| 6 | 11.5 (Alu-F) | NA | 7.8 (Ad-Al) | 5 (Ad-Al) |

| | | | | |
|---|---|---|---|---|
| Alu - F = aluminium failure / Ad-Alu = Adhesive failure. | | | | |

The Comparative Examples (Samples 1 & 2), prepared using aromatic based polyisocyanate prepolymers with standard or ultra-low levels of free monomer, failed the high retort testing and almost failed the low retort testing. The laminates that survived the low retort process, by keeping their aspect and not showing delamination, finished with almost no bond strength and are thus unfit for use in retort applications.

The four samples based on Inventive Example 3 (i.e., samples 3, 4, 5 & 6) cured with various polyol crosslinkers and survived both the low and high retort processes, keeping their aspect and integrity, while displaying adequate bond strength.

The present invention has been described in detail, including the various embodiments thereof.

## Claims

1. A solvent-free, lamination adhesive kit comprising:
a) a composition comprising:
i) an isocyanate-functionalised, aliphatic polyurethane prepolymer comprising monomeric units derived from aliphatic isocyanate monomers, wherein an aliphatic polyurethane prepolymer is formed from aliphatic isocyanate monomers, wherein the identity of the isocyanate alone dictates the polyurethane as being aliphatic or aromatic, and wherein an aliphatic isocyanate monomer is one wherein the isocyanate group(s) is/are not directly attached to an aromatic ring; wherein the aliphatic isocyanate monomers are diisocyanates selected from the group consisting of hexamethylene diisocyanate, isophorone diisocyanate, methylene dicyclohexyl diisocyanate, xylylene diisocyanate, tetramethylxylylene diisocyanate, pentamethylene diisocyanate, and combinations thereof; wherein the isocyanate-functionalised, aliphatic polyurethane prepolymer is derived from a polyester polyol and/or a polyether polyol; wherein the molar ratio of the NCO groups of the aliphatic isocyanate monomers to the HO groups of the polyol from which the isocyanate-functionalised, aliphatic polyurethane prepolymer is derived is from 5:1 to 2:1; and
ii) a further aliphatic polyisocyanate selected from the group consisting of aliphatic polyisocyanate trimers, aliphatic polyisocyanate allophanates, aliphatic polyisocyanate biurets, aliphatic polyisocyanate oligomers, aliphatic polyisocyanate uretdiones, and combinations thereof; and
b) a polyol crosslinker, wherein the polyol crosslinker is a linear or branched polyether polyol and/or a linear or branched polyester polyol;
wherein the amount of free isocyanate monomer present in the polyurethane prepolymer is less than or equal to 0.1% (w/w) of said prepolymer; wherein the amount of free isocyanate monomer is determined according to the method described in the description; and wherein the polyol crosslinker does not comprise a silane additive capable of reacting with isocyanates.

2. The kit of claim 1, wherein the aliphatic isocyanate monomers are diisocyanates selected from the group consisting of isophorone diisocyanate, 1,6-hexane diisocyanate, xylylene diisocyanate, and combinations thereof, such as wherein the aliphatic isocyanate monomers are xylylene diisocyanate.

3. The kit of any preceding claim, wherein:
I) the isocyanate-functionalised, aliphatic polyurethane prepolymer is difunctionalised with isocyanate groups, optionally wherein the isocyanate-functionalised, aliphatic polyurethane prepolymer is linear and functionalised with an isocyanate group at each terminus; and/or
II) the isocyanate-functionalised, aliphatic polyurethane prepolymer has a viscosity at 80 °C of 800 mPa to 20,000 mPas, such as 1,000 mPas to 10,000 mPas, or 2,000 mPas to 7,000 mPas; wherein the viscosity is measured according to the method described in the description; and/or
III) the isocyanate-functionalised, aliphatic polyurethane prepolymer has an isocyanate group content (%NCO) of 3% to 16%, such as 5% to 10%; and/or
IV) the isocyanate-functionalised, aliphatic polyurethane prepolymer is derived from equal to or greater than 95mol% aliphatic isocyanate monomers, relative to the total isocyanate monomers incorporated into the prepolymer; and/or
V) the only isocyanate monomers incorporated into the isocyanate-functionalised, aliphatic polyurethane prepolymer are aliphatic isocyanate monomers; and/or
VI) the isocyanate-functionalised, aliphatic polyurethane prepolymer is derived from a polyester polyol comprising monomeric units derived from aromatic monomers; and/or
VII) the isocyanate-functionalised, aliphatic polyurethane prepolymer is derived from at least 50wt% polyester polyol relative to the total amount of polyols incorporated into the prepolymer.

4. The kit of any preceding claim, wherein:
I) the polyester polyol from which the isocyanate-functionalised, aliphatic polyurethane prepolymer is derived comprises monomeric units derived from aromatic dicarboxylic acids and monomeric units derived from aliphatic dicarboxylic acids; and/or
II) the polyester polyol from which the isocyanate-functionalised, aliphatic polyurethane prepolymer is derived is itself derived from 10 to 55wt% aromatic dicarboxylic acids, such as 15 to 45wt%, or 15 to 35wt% aromatic dicarboxylic acids; and/or
III) the polyester polyol from which the isocyanate-functionalised, aliphatic polyurethane prepolymer is derived is itself derived from 10wt% to 55wt% aliphatic dicarboxylic acids, such as 15 to 45wt%, or 15 to 35wt% aliphatic dicarboxylic acids; and/or
IV) the polyester polyol from which the isocyanate-functionalised, aliphatic polyurethane prepolymer is derived comprises monomer units derived from a mixture of linear and branched glycols; optionally wherein the linear and branched glycols have a molecular weight of less than 500 gmol⁻¹, such as less than 200 gmol⁻¹; and/or
V) the polyester polyol and/or polyether polyol from which the isocyanate-functionalised, aliphatic polyurethane prepolymer is derived has a number average molecular weight of less than or equal to 1000 g/mol; and/or
VI) the polyester polyol and/or polyether polyol from which the isocyanate-functionalised, aliphatic polyurethane prepolymer is derived is linear.

5. The kit of any preceding claim, wherein:
I) the molar ratio of the NCO groups of the aliphatic isocyanate monomers to the HO groups of the polyol from which the isocyanate-functionalised, aliphatic polyurethane prepolymer is derived is from 4:1 to 2:1, or from 3:1 to 2:1; and/or
II) the polyol crosslinker is a linear or branched polyester polyol, or the polyol crosslinker is a mixture of at least one linear or branched polyester polyol and at least one linear or branched polyether polyol.

6. The kit of any preceding claim, wherein the polyol crosslinker is a polyester polyol formed from one or more glycols and one or more dicarboxylic acids;
optionally wherein:
I) the one or more glycols are selected from the group consisting of ethylene glycol, diethylene glycol, triethylene glycol, propylene glycol, neopentyl glycol, tetramethylene glycol, polyethylene glycol, polypropylene glycol, polybutylene glycol, the methyl ether derivatives of any of the above glycols, and combinations thereof; and/or
II) the dicarboxylic acid is selected from the group consisting of the aliphatic dicarboxylic acids: malonic acid, succinic acid, glutaric acid, adipic acid, pimelic acid, suberic acid, azelaic acid, sebacic acid, methylsuccinic acid, aspartic acid, malic acid, and the aromatic dicarboxylic acids: terephthalic acid, isophthalic acid, and combinations thereof; and/or
III) the polyester polyol of the polyol crosslinker is derived from non-glycol polyols, such as trimethylolpropane.

7. The kit of any preceding claim, wherein:
I) the polyol crosslinker is a polyester polyol comprising tertiary amine groups in the backbone; and/or
II) the further aliphatic polyisocyanate has a viscosity at 23 °C of 3,000 mPas or less, such as 2,000 mPas or less, 1,000 or less, or 500 or less; and/or
III) the further aliphatic polyisocyanate is selected from the group consisting of hexamethylenediisocyanate trimer, hexamethylenediisocyanate allophanate, hexamethylenediisocyanate biuret, and combinations thereof; and/or
IV) the wt% ratio of the polyurethane prepolymer to the further polyisocyanate in the composition comprising the further aliphatic polyisocyanate is from 8:1 to 1:1, such as from 5:1 to 2:1, or 3:1 to 2:1.

8. A laminate adhesive comprising the components of the solvent-free, lamination adhesive kit according to any preceding claim mixed together in a single composition.

9. A retort pouch comprising the laminate adhesive of claim 8.

10. A method of providing a multi-laminate structure, comprising:
a) forming a laminate adhesive from the components of the kit of any one of claims 1 to 7 or providing the laminate adhesive of claim 8; and
b) applying the laminate adhesive onto a flexible film.

11. The method of claim 10, wherein
I) the flexible film is selected from the group consisting of polyethylene terephthalate, Nylon, aluminium, orientated polypropylene, cast polypropylene, low density polyethylene, linear low density polyethylene, vacuum modified polyethylene terephthalate , aluminium oxide-polyethylene terephthalate, silicon oxide-polyethylene terephthalate , aluminium oxide-orientated polypropylene, silicon oxide coated orientated polypropylene, aluminium oxide-orientated polyethylene, silicon oxide-orientated polyethylene, aluminium oxide-Nylon and silicon oxide-Nylon , and any coated film thereof; and/or
II) wherein the method comprises applying the adhesive at press speeds in excess of 50m/min, or in excess of 100m/min.

12. A laminate adhesive structure resulting from the method of claims 10 or 11.

13. The structure of claim 12, which is suitable for the preparation of retort pouches wherein no delamination failures occur at retort conditions of 100°C, and greater.

14. A method of making the kit of any preceding claim, comprising the steps of:
a) reacting aliphatic isocyanate monomers with a polyester polyol and/or polyether polyol to obtain an isocyanate-functionalised, aliphatic polyurethane prepolymer comprising monomeric units derived from said aliphatic isocyanate monomers; wherein an aliphatic polyurethane prepolymer is formed from aliphatic isocyanates, wherein the identity of the isocyanate alone dictates the polyurethane as being aliphatic or aromatic, wherein an aliphatic isocyanate is one wherein the isocyanate group(s) is/are not directly attached to an aromatic ring;
wherein the aliphatic isocyanate monomers are diisocyanates selected from the group consisting of hexamethylene diisocyanate, isophorone diisocyanate, methylene dicyclohexyl diisocyanate, xylylene diisocyanate, tetramethylxylylene diisocyanate, pentamethylene diisocyanate, and combinations thereof;
wherein the molar ratio of the NCO groups of the aliphatic isocyanate monomers to the HO groups of the polyol from which the isocyanate-functionalised, aliphatic polyurethane prepolymer is derived is from 5:1 to 2:1;
b) reducing the residual isocyanate monomer present in the aliphatic polyurethane prepolymer to less than 0.1% (w/w) of the prepolymer;
c) introducing a further aliphatic polyisocyanate selected from the group consisting of aliphatic polyisocyanate trimers, aliphatic polyisocyanate allophanates, aliphatic polyisocyanate biurets, aliphatic polyisocyanate oligomers, aliphatic polyisocyanate uretdiones, and combinations thereof; and
d) introducing a polyol crosslinker to the kit; wherein the polyol crosslinker is a linear or branched polyether polyol and/or a linear or branched polyester polyol; wherein the polyol crosslinker does not comprise a silane additive capable of reacting with isocyanates.

15. The method of claim 14, wherein:
I) the aliphatic isocyanate monomers are diisocyanates selected from the group consisting of isophorone diisocyanate, 1,6-hexane diisocyanate, xylylene diisocyanate, and combinations thereof; and/or
II) the amount of isocyanate monomer is reduced by stripping the prepolymer using a series of one or more wiped-film evaporators and/or short-path evaporators; and/or
III) the isocyanate-functionalised, aliphatic polyurethane prepolymer is the isocyanate-functionalised, aliphatic polyurethane prepolymer according to claim 3; and/or
IV) step a) comprises reacting the aliphatic isocyanate with a polyester polyol; optionally wherein the polyester polyol is the polyester polyol according to claim 4.

16. The method of any of claims 14 or 15, wherein:
I) before step a), the method further comprises the step of reacting a mixture of aromatic and aliphatic dicarboxylic acids with at least one polyol to form the polyester polyol; optionally wherein the at least one polyol is selected from the group consisting of neopentyl glycol, 1,6-hexanediol, 3-methyl, 1-5-pentane diol, monoethylene glycol, and combinations thereof; and/or
II) wherein the kit is free of solvent.

17. Use of the kit according to any of claims 1 to 7 for forming a laminate adhesive;
optionally wherein the laminate adhesive forms part of a retort packaging, such as a pouch.

18. Use of the kit according to any of claims 1 to 7 or 17 to improve bonding strength under retort conditions of a multi-laminate structure formed from a flexible film and a laminate adhesive formed from said kit relative to a multi-laminate structure formed from said flexible film and a laminate adhesive not formed from the kit of the invention, wherein bonding strength is the strength required to separate at least two layers of the multi-laminate structure that are joined together with said adhesive and is measured at room temperature (25 C°) and at 100 mm/min;
optionally wherein the retort conditions comprise heating at 100 °C or higher for a period of 20 minutes, such as heating at 120 °C for 30 minutes at 1.5 bar, or heating at 135 °C for 20 minutes at 2.6 bar;
and/or optionally wherein retort conditions comprise placing the multi-laminate structure in an autoclave with an internal pressure of 1.5 bar to 3 bar, such as 1.5 bar or 2.6 bar.

## Patentansprüche

1. Lösungsmittelfreies Kaschierklebstoffkit, umfassend:
a) eine Zusammensetzung, umfassend:
i) ein isocyanatfunktionalisiertes, aliphatisches Polyurethanprepolymer, umfassend Monomereinheiten, die sich von aliphatischen Isocyanatmonomeren ableiten, wobei ein aliphatisches Polyurethanprepolymer aus aliphatischen Isocyanatmonomeren gebildet ist, wobei die Identität des Isocyanats allein diktiert, ob das Polyurethan aliphatisch oder aromatisch ist, und wobei ein aliphatisches Isocyanatmonomer eines ist, in dem die Isocyanatgruppe(n) nicht direkt an einen aromatischen Ring gebunden ist/sind; wobei es sich bei den aliphatischen Isocyanatmonomeren um Diisocyanate handelt, die aus der Gruppe bestehend aus Hexamethylendiisocyanat, Isophorondiisocyanat, Methylendicyclohexyldiisocyanat, Xylylendiisocyanat, Tetramethylxylylendiisocyanat, Pentamethylendiisocyanat und Kombinationen davon ausgewählt sind; wobei sich das isocyanatfunktionalisierte, aliphatische Polyurethanprepolymer von einem Polyesterpolyol und/oder einem Polyetherpolyol ableitet; wobei das Molverhältnis der NCO-Gruppen der aliphatischen Isocyanatmonomere zu den HO-Gruppen des Polyols, von dem sich das isocyanatfunktionalisierte, aliphatische Polyurethanprepolymer ableitet, von 5:1 bis 2:1 beträgt; und
ii) ein weiteres aliphatisches Polyisocyanat, das aus der Gruppe bestehend aus aliphatischen Polyisocyanattrimeren, aliphatischen Polyisocyanatallophanaten, aliphatischen Polyisocyanatbiureten, aliphatischen Polyisocyanatoligomeren, aliphatischen Polyisocyanaturetdionen und Kombinationen davon ausgewählt ist; und
b) einen Polyolvernetzer, wobei der Polyolvernetzer ein lineares oder verzweigtes Polyetherpolyol und/oder ein lineares oder verzweigtes Polyesterpolyol ist;
wobei die Menge an freiem Isocyanatmonomer, das im Polyurethanprepolymer vorliegt, kleiner oder gleich 0,1 % (w/w) des Prepolymers ist; wobei die Menge an freiem Isocyanatmonomer gemäß dem in der Beschreibung beschriebenen Verfahren bestimmt wird und wobei der Polyolvernetzer kein Silanadditiv, das mit Isocyanaten reagieren kann, umfasst.

2. Kit nach Anspruch 1, wobei es sich bei den aliphatischen Isocyanatmonomeren um Diisocyanate handelt, die aus der Gruppe bestehend aus Isophorondiisocyanat, 1,6-Hexandiisocyanat, Xylylendiisocyanat und Kombinationen davon ausgewählt sind, wie wobei es sich bei den aliphatischen Isocyanatmonomeren um Xylylendiisocyanat handelt.

3. Kit nach einem der vorhergehenden Ansprüche, wobei:
I) das isocyanatfunktionalisierte, aliphatische Polyurethanprepolymer mit Isocyanatgruppen difunktionalisiert ist, gegebenenfalls wobei das isocyanatfunktionalisierte, aliphatische Polyurethanprepolymer linear und an jedem Ende mit einer Isocyanatgruppe funktionalisiert ist; und/oder
II) das isocyanatfunktionalisierte, aliphatische Polyurethanprepolymer eine Viskosität bei 80 °C von 800 MPa bis 20.000 mPas, wie 1.000 mPas bis 10.000 mPas oder 2.000 mPas bis 7.000 mPas, aufweist; wobei die Viskosität gemäß dem in der Beschreibung beschriebenen Verfahren gemessen wird; und/oder
III) das isocyanatfunktionalisierte, aliphatische Polyurethanprepolymer einen Isocyanatgruppengehalt (%NCO) von 3 % bis 16 %, wie 5 % bis 10 %, aufweist und/oder
IV) sich das isocyanatfunktionalisierte, aliphatische Polyurethanprepolymer von gleich oder größer als 95 Mol-% aliphatischen Isocyanatmonomeren, bezogen auf die gesamten in das Prepolymer eingebauten Isocyanatmonomere, ableitet und/oder
V) die einzigen Isocyanatmonomere, die in das isocyanatfunktionalisierte, aliphatische Polyurethanprepolymer eingebaut sind, aliphatische Isocyanatmonomere sind und/oder
VI) sich das isocyanatfunktionalisierte, aliphatische Polyurethanprepolymer von einem Polyesterpolyol ableitet, das Monomereinheiten umfasst, die sich von aromatischen Monomeren ableiten; und/oder
VII) sich das isocyanatfunktionalisierte, aliphatische Polyurethanprepolymer von mindestens 50 Gew.-% Polyesterpolyol, bezogen auf die Gesamtmenge der in das Prepolymer eingebauten Polyole, ableitet.

4. Kit nach einem der vorhergehenden Ansprüche, wobei:
I) das Polyesterpolyol, von dem sich das isocyanatfunktionalisierte, aliphatische Polyurethanprepolymer ableitet, Monomereinheiten, die sich von aromatischen Dicarbonsäuren ableiten, und Monomereinheiten, die sich von aliphatischen Dicarbonsäuren ableiten, umfasst und/oder
II) das Polyesterpolyol, von dem sich das isocyanatfunktionalisierte, aliphatische Polyurethanprepolymer ableitet, sich selbst von 10 bis 55 Gew.-% aromatischen Dicarbonsäuren, wie 15 bis 45 Gew.-% oder 15 bis 35 Gew.-% aromatischen Dicarbonsäuren, ableitet und/oder
III) das Polyesterpolyol, von dem sich das isocyanatfunktionalisierte, aliphatische Polyurethanprepolymer ableitet, sich selbst von 10 bis 55 Gew.-% aliphatischen Dicarbonsäuren, wie 15 bis 45 Gew.-% oder 15 bis 35 Gew.-% aliphatischen Dicarbonsäuren, ableitet und/oder
IV) das Polyesterpolyol, von dem sich das isocyanatfunktionalisierte, aliphatische Polyurethanprepolymer ableitet, Monomereinheiten umfasst, die sich von einer Mischung von linearen und verzweigten Glykolen ableiten; gegebenenfalls wobei die linearen und verzweigten Glykole ein Molekulargewicht von weniger als 500 gmol⁻¹, wie weniger als 200 gmol⁻¹, aufweisen; und/oder
V) das Polyesterpolyol und/oder Polyetherpolyol, von dem bzw. denen sich das isocyanatfunktionalisierte, aliphatische Polyurethanprepolymer ableitet, ein zahlenmittleres Molekulargewicht kleiner oder gleich 1000 g/mol aufweist und/oder
VI) das Polyesterpolyol und/oder Polyetherpolyol, von dem bzw. denen sich das isocyanatfunktionalisierte, aliphatische Polyurethanprepolymer ableitet, linear ist.

5. Kit nach einem der vorhergehenden Ansprüche, wobei:
I) das Molverhältnis der NCO-Gruppen der aliphatischen Isocyanatmonomere zu den HO-Gruppen des Polyols, von dem sich das isocyanatfunktionalisierte, aliphatische Polyurethanprepolymer ableitet, von 4:1 bis 2:1 oder von 3:1 bis 2:1 beträgt und/oder
II) es sich beim Polyolvernetzer um ein lineares oder verzweigtes Polyesterpolyol handelt oder es sich beim Polyolvernetzer um eine Mischung von mindestens einem linearen oder verzweigten Polyesterpolyol und mindestens einem linearen oder verzweigten Polyetherpolyol handelt.

6. Kit nach einem der vorhergehenden Ansprüche, wobei es sich beim Polyolvernetzer um ein aus einem oder mehreren Glykol(en) und einer oder mehreren Dicarbonsäure(n) gebildetes Polyesterpolyol handelt;
gegebenenfalls wobei:
I) das eine oder die mehreren Glykol(e) aus der Gruppe bestehend aus Ethylenglykol, Diethylenglykol, Triethylenglykol, Propylenglykol, Neopentylglykol, Tetramethylenglykol, Polyethylenglykol, Polypropylenglykol, Polybutylenglykol, die Methyletherderivate eines der obigen Glykole und Kombinationen davon ausgewählt sind und/oder
II) die Dicarbonsäure aus der Gruppe bestehend aus den aliphatischen Dicarbonsäuren: Malonsäure, Bernsteinsäure, Glutarsäure, Adipinsäure, Pimelinsäure, Korksäure, Azelainsäure, Sebacinsäure, Methylbernsteinsäure, Asparaginsäure, Äpfelsäure, und den aromatischen Dicarbonsäuren: Terephthalsäure, Isophthalsäure, und Kombinationen davon ausgewählt ist und/oder
III) sich das Polyesterpolyol des Polyolvernetzers von Nicht-Glykol-Polyolen, wie Trimethylolpropan, ableitet.

7. Kit nach einem der vorhergehenden Ansprüche, wobei:
I) es sich beim Polyolvernetzer um ein Polyesterpolyol, umfassend tertiäre Amingruppen in der Hauptkette, handelt und/oder
II) das weitere aliphatische Polyisocyanat eine Viskosität bei 23 °C von 3.000 mPas oder weniger, wie 2.000 mPas oder weniger, 1.000 oder weniger oder 500 oder weniger, aufweist und/oder
III) das weitere aliphatische Polyisocyanat aus der Gruppe bestehend aus Hexamethylendiisocyanattrimer, Hexamethylendiisocyanatallophanat,
Hexamethylendiisocyanatbiuret und Kombinationen davon ausgewählt ist und/oder
IV) das Gew.-%-Verhältnis des Polyurethanprepolymers zum weiteren Polyisocyanat in der Zusammensetzung, die das weitere aliphatische Polyisocyanat umfasst, von 8:1 bis 1:1, wie von 5:1 bis 2:1 oder von 3:1 bis 2:1, beträgt.

8. Kaschierklebstoff, umfassend die Komponenten des lösungsmittelfreien Kaschierklebstoffkits nach einem der vorhergehenden Ansprüche, die in einer einzigen Zusammensetzung miteinander vermischt sind.

9. Retortenbeutel, umfassend den Kaschierklebstoff nach Anspruch 8.

10. Verfahren zum Bereitstellen einer Multilaminatstruktur, umfassend:
a) Bilden eines Kaschierklebstoffs aus den Komponenten des Kits nach einem der Ansprüche 1 bis 7 oder Bereitstellen des Kaschierklebstoffs nach Anspruch 8 und
b) Aufbringen des Kaschierklebstoffs auf eine flexible Folie.

11. Verfahren nach Anspruch 10, wobei
I) die flexible Folie aus der Gruppe bestehend aus Polyethylenterephthalat, Nylon, Aluminium, orientiertem Polypropylen, gegossenem Polypropylen, Polyethylen niedriger Dichte, linearem Polyethylen niedriger Dichte, vakuummodifiziertem Polyethylenterephthalat, Aluminiumoxid-Polyethylenterephthalat, Siliciumoxid-Polyethylenterephthalat, Aluminiumoxid-orientiertem Polypropylen, Siliciumoxid-beschichtetem orientiertem Polypropylen, Aluminiumoxid-orientiertem Polyethylen, Siliciumoxid-orientiertem Polyethylen, Aluminiumoxid-Nylon und Siliciumoxid-Nylon und einer beliebigen beschichtete Folie davon ausgewählt wird und/oder
II) wobei das Verfahren das Aufbringen des Klebstoffs bei Pressengeschwindigkeiten von mehr als 50 m/min oder mehr als 100 m/min umfasst.

12. Kaschierklebstoffstruktur, die aus dem Verfahren nach Anspruch 10 oder 11 resultiert.

13. Struktur nach Anspruch 12, die für die Herstellung von Retortenbeuteln geeignet ist, wobei bei Retortenbedingungen von 100 °C und mehr keine Delaminierungsfehler auftreten.

14. Verfahren zur Herstellung des Kits nach einem der vorhergehenden Ansprüche, das die Schritte umfasst:
a) Umsetzen von aliphatischen Isocyanatmonomeren mit einem Polyesterpolyol und/oder Polyetherpolyol zum Erhalt eines isocyanatfunktionalisierten, aliphatischen Polyurethanprepolymers, das Monomereinheiten umfasst, die sich von den aliphatischen Isocyanatmonomeren ableiten; wobei ein aliphatisches Polyurethanprepolymer aus aliphatischen Isocyanatmonomeren gebildet ist, wobei die Identität des Isocyanats allein diktiert, ob das Polyurethan aliphatisch oder aromatisch ist, wobei ein aliphatisches Isocyanatmonomer eines ist, in dem die Isocyanatgruppe(n) nicht direkt an einen aromatischen Ring gebunden ist/sind;
wobei es sich bei den aliphatischen Isocyanatmonomeren um Diisocyanate handelt, die aus der Gruppe bestehend aus Hexamethylendiisocyanat, Isophorondiisocyanat, Methylendicyclohexyldiisocyanat, Xylylendiisocyanat, Tetramethylxylylendiisocyanat, Pentamethylendiisocyanat und Kombinationen davon ausgewählt sind;
wobei das Molverhältnis der NCO-Gruppen der aliphatischen Isocyanatmonomere zu den HO-Gruppen des Polyols, von dem sich das isocyanatfunktionalisierte, aliphatische Polyurethanprepolymer ableitet, von 5:1 bis 2:1 beträgt;
b) Verringern des im aliphatischen Polyurethanprepolymer vorliegenden restlichen Isocyanatmonomers auf weniger als 0,1 % (w/w) des Prepolymers;
c) Einführen eines weiteren aliphatischen Polyisocyanats, das aus der Gruppe bestehend aus aliphatischen Polyisocyanattrimeren, aliphatischen Polyisocyanatallophanaten, aliphatischen Polyisocyanatbiureten, aliphatischen Polyisocyanatoligomeren, aliphatischen Polyisocyanaturetdionen und Kombinationen davon ausgewählt wird; und
d) Einführen eines Polyolvernetzers in das Kit; wobei es sich bei dem Polyolvernetzer um ein lineares oder verzweigtes Polyetherpolyol und/oder ein lineares oder verzweigtes Polyesterpolyol handelt; wobei der Polyolvernetzer kein Silanadditiv, das mit Isocyanaten reagieren kann, umfasst.

15. Verfahren nach Anspruch 14, wobei:
I) es sich bei den aliphatischen Isocyanatmonomeren um Diisocyanate handelt, die aus der Gruppe bestehend aus Isophorondiisocyanat, 1,6-Hexandiisocyanat, Xylylendiisocyanat und Kombinationen davon ausgewählt sind; und/oder
II) die Menge an Isocyanatmonomer durch Strippen des Prepolymers unter Verwendung einer Reihe von einem oder mehreren Wischfilmverdampfer(n) und/oder Kurzwegverdampfer(n) verringert wird und/oder
III) es sich beim isocyanatfunktionalisierten, aliphatischen Polyurethanprepolymer um das isocyanatfunktionalisierte, aliphatische Polyurethanprepolymer nach Anspruch 3 handelt und/oder
IV) Schritt a) das Umsetzen des aliphatischen Isocyanats mit einem Polyesterpolyol umfasst; gegebenenfalls wobei es sich bei dem Polyesterpolyol um das Polyesterpolyol nach Anspruch 4 handelt.

16. Verfahren nach Anspruch 14 oder 15, wobei:
I) das Verfahren vor Schritt a) ferner den Schritt des Umsetzens einer Mischung von aromatischen und aliphatischen Dicarbonsäuren mit mindestens einem Polyol zur Bildung des Polyesterpolyols umfasst; gegebenenfalls wobei das mindestens eine Polyol aus der Gruppe bestehend aus Neopentylglykol, 1,6-Hexandiol, 3-Methyl,1-5-pentandiol, Monoethylenglykol und Kombinationen davon ausgewählt wird; und/oder
II) wobei das Kit lösungsmittelfrei ist.

17. Verwendung des Kits nach einem der Ansprüche 1 bis 7 zum Bilden eines Kaschierklebstoffs; gegebenenfalls wobei der Kaschierklebstoff Teil einer Retortenverpackung, wie eines Beutels, ist.

18. Verwendung des Kits nach einem der Ansprüche 1 bis 7 oder 17 zur Verbesserung der Verklebungsfestigkeit unter Retortenbedingungen einer aus einer flexiblen Folie gebildeten Multilaminatstruktur und eines aus dem Kit gebildeten Kaschierklebstoffs gegenüber einer aus der flexiblen Folie gebildeten Multilaminatstruktur und eines nicht aus dem erfindungsgemäßen Kit gebildeten Kaschierklebstoffs, wobei die Verklebungsfestigkeit die Festigkeit ist, die zum Trennen von mindestens zwei Schichten der Multilaminatstruktur, die mit dem Klebstoff verklebt sind, erforderlich ist, und bei Raumtemperatur (25 °C) und bei 100 mm/min gemessen wird;
gegebenenfalls wobei die Retortenbedingungen ein Erhitzen auf 100 °C oder mehr für einen Zeitraum von 20 Minuten, wie ein Erhitzen auf 120 °C für 30 Minuten bei 1,5 bar oder ein Erhitzen auf 135 °C für 20 Minuten bei 2,6 bar, umfassen
und/oder gegebenenfalls wobei die Retortenbedingungen das Einbringen der Multilaminatstruktur in einem Autoklaven mit einem Innendruck von 1,5 bar bis 3 bar, wie 1,5 bar oder 2,6 bar, umfassen.

## Revendications

1. Kit d'adhésif de stratification sans solvant comprenant :
a) une composition comprenant :
i) un prépolymère de polyuréthane aliphatique fonctionnalisé par isocyanate comprenant des motifs monomériques dérivés de monomères d'isocyanate aliphatique, dans lequel un prépolymère de polyuréthane aliphatique est formé à partir de monomères d'isocyanate aliphatique, dans lequel l'identité de l'isocyanate seul indique que le polyuréthane est aliphatique ou aromatique, et dans lequel un monomère d'isocyanate aliphatique est un monomère dans lequel le ou les groupes isocyanate n'est pas/ne sont pas directement liés à un cycle aromatique ; dans lequel les monomères d'isocyanate aliphatique sont des diisocyanates choisis dans le groupe constitué par le diisocyanate d'hexaméthylène, le diisocyanate d'isophorone, le diisocyanate de dicyclohexylméthylène, le diisocyanate de xylylène, le diisocyanate de tétraméthylxylylène, le diisocyanate de pentaméthylène et leurs combinaisons ; dans lequel le prépolymère de polyuréthane aliphatique fonctionnalisé par isocyanate est dérivé d'un polyester polyol et/ou d'un polyéther polyol ; dans lequel le rapport molaire des groupes NCO des monomères d'isocyanate aliphatique sur les groupes HO du polyol duquel le prépolymère de polyuréthane aliphatique fonctionnalisé par isocyanate est dérivé est de 5:1 à 2:1 ; et
ii) un autre polyisocyanate aliphatique choisi dans le groupe constitué par les trimères de polyisocyanates aliphatiques, les allophanates de polyisocyanates aliphatiques, les biurets de polyisocyanates aliphatiques, les oligomères de polyisocyanates aliphatiques, les uretdiones de polyisocyanates aliphatiques, et leurs combinaisons ; et
b) un agent de réticulation de polyol, dans lequel l'agent de réticulation de polyol est un polyéther polyol linéaire ou ramifié et/ou un polyester polyol linéaire ou ramifié ;
dans lequel la quantité de monomère d'isocyanate libre présent dans le prépolymère de polyuréthane est inférieure ou égale à 0,1 % (p/p) dudit prépolymère ; dans lequel la quantité de monomère d'isocyanate libre est déterminée selon le procédé décrit dans la description ; et dans lequel l'agent de réticulation de polyol ne comprend pas d'additif de silane capable de réagir avec des isocyanates.

2. Kit selon la revendication 1, dans lequel les monomères d'isocyanate aliphatique sont des diisocyanates choisis dans le groupe constitué par le diisocyanate d'isophorone, le 1,6-diisocyanate d'hexane, le diisocyanate de xylylène et leurs combinaisons, tel que dans lequel les monomères d'isocyanate aliphatique sont le diisocyanate de xylylène.

3. Kit selon l'une quelconque des revendications précédentes, dans lequel :
I) le prépolymère de polyuréthane aliphatique fonctionnalisé par isocyanate est difonctionnalisé par isocyanate, éventuellement dans lequel le prépolymère de polyuréthane aliphatique fonctionnalisé par isocyanate est linéaire et fonctionnalisé par un groupe isocyanate à chaque extrémité ; et/ou
II) le prépolymère de polyuréthane aliphatique fonctionnalisé par isocyanate possède une viscosité à 80 °C de 800 mPa à 20 000 mPas, telle que de 1 000 mPas à 10 000 mPas, ou de 2 000 mPas à 7 000 mPas ; la viscosité étant mesurée selon le procédé décrit dans la description ; et/ou
III) le prépolymère de polyuréthane aliphatique fonctionnalisé par isocyanate possède une teneur en groupes isocyanate (% de NCO) de 3 % à 16 %, par exemple de 5 % à 10 % ; et/ou
IV) le prépolymère de polyuréthane aliphatique fonctionnalisé par isocyanate est dérivé de 95 % en moles ou plus de monomères d'isocyanate aliphatique, par rapport aux monomères d'isocyanate totaux incorporés dans le prépolymère ; et/ou
V) les seuls monomères d'isocyanate incorporés dans le prépolymère de polyuréthane aliphatique fonctionnalisé par isocyanate sont des monomères d'isocyanate aliphatique ; et/ou
VI) le prépolymère de polyuréthane aliphatique fonctionnalisé par isocyanate est dérivé d'un polyester polyol comprenant des motifs monomériques dérivés de monomères aromatiques ; et/ou
VII) le prépolymère de polyuréthane aliphatique fonctionnalisé par isocyanate est dérivé d'au moins 50 % en poids de polyester polyol par rapport à la quantité totale de polyols incorporés dans le prépolymère.

4. Kit selon l'une quelconque des revendications précédentes, dans lequel :
I) le polyester polyol dont est dérivé le prépolymère de polyuréthane aliphatique fonctionnalisé par isocyanate comprend des motifs monomériques dérivés d'acides dicarboxyliques aromatiques et des motifs monomériques dérivés d'acides dicarboxyliques aliphatiques ; et/ou
II) le polyester polyol dont est dérivé le prépolymère de polyuréthane aliphatique fonctionnalisé par isocyanate est lui-même dérivé de 10 à 55 % en poids d'acides dicarboxyliques aromatiques, tels que 15 à 45 % en poids, ou 15 à 35 % en poids d'acides dicarboxyliques aromatiques ; et/ou
III) le polyester polyol dont est dérivé le prépolymère de polyuréthane aliphatique fonctionnalisé par isocyanate est lui-même dérivé de 10 % en poids à 55 % en poids d'acides dicarboxyliques aliphatiques, tels que 15 à 45 % en poids, ou 15 à 35 % en poids d'acides dicarboxyliques aliphatiques ; et/ou
IV) le polyester polyol dont est dérivé le prépolymère de polyuréthane aliphatique fonctionnalisé par isocyanate comprend des motifs monomériques dérivés d'un mélange de glycols linéaires et ramifiés ; éventuellement dans lequel les glycols linéaires et ramifiés ont un poids moléculaire inférieur à 500 gmol⁻¹, tel qu'inférieur à 200 gmol⁻¹ ; et/ou
V) le polyester polyol et/ou le polyéther polyol dont dérive le prépolymère de polyuréthane aliphatique fonctionnalisé par isocyanate ont un poids moléculaire moyen en nombre inférieur ou égal à 1 000 g/mole ; et/ou
VI) le polyester polyol et/ou le polyéther polyol dont dérive le prépolymère de polyuréthane aliphatique fonctionnalisé par isocyanate sont linéaires.

5. Kit selon l'une quelconque des revendications précédentes, dans lequel :
I) le rapport molaire des groupes NCO des monomères d'isocyanate aliphatique sur les groupes HO du polyol dont est dérivé le prépolymère de polyuréthane aliphatique fonctionnalisé par isocyanate est de 4:1 à 2:1, ou de 3:1 à 2:1, et/ou
II) l'agent de réticulation de polyol est un polyester polyol linéaire ou ramifié, ou l'agent de réticulation de polyol est un mélange d'au moins un polyester polyol linéaire ou ramifié et d'au moins un polyéther polyol linéaire ou ramifié.

6. Kit selon l'une quelconque des revendications précédentes, dans lequel l'agent de réticulation de polyol est un polyester polyol formé à partir d'un ou plusieurs glycols et d'un ou plusieurs acides dicarboxyliques ;
éventuellement dans lequel :
I) le ou les glycols sont choisis dans le groupe constitué par l'éthylène glycol, le diéthylène glycol, le triéthylène glycol, le propylène glycol, le néopentylglycol, le tétraméthylène glycol, un polyéthylène glycol, un polypropylène glycol, un polybutylène glycol, les dérivés d'éther méthylique de l'un quelconque des glycols ci-dessus et leurs combinaisons ; et/ou
II) l'acide dicarboxylique est choisi dans le groupe constitué par les acides dicarboxyliques aliphatiques : acide malonique, acide succinique, acide glutarique, acide adipique, acide pimélique, acide subérique, acide azélaïque, acide sébacique, acide méthylsuccinique, acide aspartique, acide malique et les acides dicarboxyliques aromatiques : acide téréphtalique, acide isophtalique et leurs combinaisons ; et/ou
III) le polyester polyol de l'agent de réticulation de polyol est dérivé de polyols non glycol, tels que le triméthylolpropane.

7. Kit selon l'une quelconque des revendications précédentes, dans lequel :
I) l'agent de réticulation de polyol est un polyester polyol comprenant des groupes amine tertiaire dans le squelette ; et/ou
II) le polyisocyanate aliphatique supplémentaire a une viscosité à 23 °C de 3 000 mPas ou moins, telle que 2 000 mPas ou moins, 1 000 ou moins, ou 500 ou moins ; et/ou
III) le polyisocyanate aliphatique supplémentaire est choisi dans le groupe constitué par le trimère d'hexaméthylènediisocyanate, l'allophanate d'hexaméthylènediisocyanate, le biuret d'hexaméthylènediisocyanate et leurs combinaisons ; et/ou
IV) le rapport en % en poids du prépolymère de polyuréthane sur le polyisocyanate supplémentaire dans la composition comprenant le polyisocyanate aliphatique supplémentaire est de 8:1 à 1:1, par exemple de 5:1 à 2:1, ou de 3:1 à 2:1.

8. Adhésif stratifié comprenant les composants du kit d'adhésif de stratification sans solvant selon l'une quelconque des revendications précédentes mélangés ensemble dans une composition unique.

9. Sachet d'autoclave comprenant l'adhésif stratifié selon la revendication 8.

10. Procédé de production d'une structure multi-stratifiée, comprenant :
a) formation d'un adhésif stratifié à partir des composants du kit selon l'une quelconque des revendications 1 à 7 ou fourniture de l'adhésif stratifié selon la revendication 8 ; et
b) application de l'adhésif stratifié sur un film flexible.

11. Procédé selon la revendication 10, dans lequel
I) le film flexible est choisi dans le groupe constitué par un poly(téréphtalate d'éthylène), un nylon, l'aluminium, un polypropylène orienté, un polypropylène coulé, un polyéthylène basse densité, un polyéthylène basse densité linéaire, un poly(téréphtalate d'éthylène) modifié sous vide, un oxyde d'aluminium-poly (téréphtalate d'éthylène), un oxyde de silicium-poly (téréphtalate d'éthylène), un oxyde d'aluminium-polypropylène orienté, un polypropylène orienté revêtu par de l'oxyde de silicium, un oxyde d'aluminium-polyéthylène orienté, un oxyde de silicium-polyéthylène orienté, un oxyde d'aluminium-nylon et un oxyde de silicium-nylon, et un quelconque film revêtu correspondant ; et/ou
II) dans lequel le procédé comprend l'application de l'adhésif à des vitesses de presse supérieures à 50 m/min, ou supérieures à 100 m/min.

12. Structure adhésive stratifiée résultant du procédé selon les revendications 10 ou 11.

13. Structure selon la revendication 12, qui est appropriée pour la préparation de sachets d'autoclave, dans laquelle aucun défaut de délaminage ne se produit dans des conditions d'autoclave de 100 °C, et plus.

14. Procédé de préparation du kit selon l'une quelconque des revendications précédentes, comprenant les étapes de :
a) mise en réaction de monomères d'isocyanate aliphatique avec un polyester polyol et/ou un polyéther polyol pour obtenir un prépolymère de polyuréthane aliphatique fonctionnalisé par isocyanate comprenant des motifs monomériques dérivés desdits monomères d'isocyanate aliphatique ; dans lequel un prépolymère de polyuréthane aliphatique est formé à partir d'isocyanates aliphatiques, dans lequel l'identité de l'isocyanate seul indique que le polyuréthane est aliphatique ou aromatique, dans lequel un isocyanate aliphatique en est un dans lequel le ou les groupes isocyanate ne sont pas directement fixés à un cycle aromatique ;
dans lequel les monomères d'isocyanate aliphatique sont des diisocyanates choisis dans le groupe constitué par le diisocyanate d'hexaméthylène, le diisocyanate d'isophorone, le diisocyanate de méthylène dicyclohexyle, le diisocyanate de xylylène, le diisocyanate de tétraméthylxylylène, le diisocyanate de pentaméthylène et leurs combinaisons ;
dans lequel le rapport molaire des groupes NCO des monomères d'isocyanate aliphatique sur les groupes HO du polyol dont est dérivé le prépolymère de polyuréthane aliphatique fonctionnalisé par isocyanate est de 5:1 à 2:1 ;
b) réduction du monomère d'isocyanate résiduel présent dans le prépolymère de polyuréthane aliphatique jusqu'à moins de 0,1 % (p/p) du prépolymère ;
c) introduction d'un polyisocyanate aliphatique supplémentaire choisi dans le groupe constitué par les trimères de polyisocyanates aliphatiques, les allophanates de polyisocyanates aliphatiques, les biurets de polyisocyanates aliphatiques, les oligomères de polyisocyanates aliphatiques, les uretdiones de polyisocyanates aliphatiques, et leurs combinaisons ; et
d) introduction d'un agent de réticulation de polyol dans le kit ; dans lequel l'agent de réticulation de polyol est un polyéther polyol linéaire ou ramifié et/ou un polyester polyol linéaire ou ramifié ; dans lequel l'agent de réticulation de polyol ne comprend pas d'additif de silane capable de réagir avec des isocyanates.

15. Procédé selon la revendication 14, dans lequel :
I) les monomères d'isocyanate aliphatique sont des diisocyanates choisis dans le groupe constitué par le diisocyanate d'isophorone, le 1,6-diisocyanate d'hexane, le diisocyanate de xylylène et leurs combinaisons ; et/ou
II) la quantité de monomère d'isocyanate est réduite par strippage du prépolymère à l'aide d'une série d'un ou plusieurs évaporateurs à film essuyé et/ou évaporateurs à court trajet ; et/ou
III) le prépolymère de polyuréthane aliphatique fonctionnalisé par isocyanate est le prépolymère de polyuréthane aliphatique fonctionnalisé par isocyanate selon la revendication 3 ; et/ou
IV) l'étape a) comprend la mise en réaction de l'isocyanate aliphatique avec un polyester polyol ; éventuellement dans lequel le polyester polyol est le polyester polyol selon la revendication 4.

16. Procédé selon l'une quelconque des revendications 14 ou 15, dans lequel :
I) avant l'étape a), le procédé comprend en outre l'étape de mise en réaction d'un mélange d'acides dicarboxyliques aromatiques et aliphatiques avec au moins un polyol pour former le polyester polyol ; éventuellement, l'au moins un polyol est choisi dans le groupe constitué par le néopentylglycol, le 1,6-hexanediol, le 3-méthyl,1-5-pentanediol, le monoéthylène glycol et leurs combinaisons ; et/ou
II) dans lequel le kit est exempt de solvant.

17. Utilisation du kit selon l'une quelconque des revendications 1 à 7 pour former un adhésif stratifié ; éventuellement, dans laquelle l'adhésif stratifié fait partie d'un emballage d'autoclave, tel qu'un sachet.

18. Utilisation du kit selon l'une quelconque des revendications 1 à 7 ou 17 pour améliorer la force de liaison dans des conditions d'autoclave d'une structure multi-stratifiée formée à partir d'un film flexible et d'un adhésif stratifié formé à partir dudit kit par rapport à une structure multi-stratifiée formée à partir dudit film flexible et d'un adhésif stratifié non formé à partir du kit de l'invention, dans laquelle la force de liaison est la force nécessaire pour séparer au moins deux couches de la structure multi-stratifiée qui sont assemblées avec ledit adhésif et est mesurée à température ambiante (25 °C) et à 100 mm/min ;
éventuellement, les conditions d'autoclave comprenant un chauffage à 100 °C ou plus pendant une période de 20 minutes, tel qu'un chauffage à 120 °C pendant 30 minutes à 1,5 bar, ou un chauffage à 135 °C pendant 20 minutes à 2,6 bars ;
et/ou éventuellement dans laquelle les conditions d'autoclave comprennent le placement de la structure multi-stratifiée dans un autoclave avec une pression interne de 1,5 bar à 3 bars, telle que 1,5 bar ou 2,6 bars.
